# EUROPÄISCHE PATENTSCHRIFT

(11) **EP 4 200 128 B1**
(45) Veröffentlichungstag und Bekanntmachung des Hinweises auf die Patenterteilung: **25.02.2026**
(21) Anmeldenummer: 21772757.7
(22) Anmeldetag: 31.08.2021
(51) Int. Cl.: B30B 9/22, B01D 29/82, B30B 15/00, C12G 1/00, B30B 15/32

(54) **MODULARE PRESSE**
MODULAR PRESS
PRESSOIR MODULAIRE

(30) Priorität: 30.09.2020 DE 102020125603; 30.09.2020 DE 102020125608
(43) Veröffentlichungstag der Anmeldung: 28.06.2023
(73) Patentinhaber: Willmes Anlagentechnik GmbH, 64653 Lorsch (DE)
(72) Erfinder: WILLMES, Ulrich, 64653 Lorsch (DE)
(74) Vertreter: Kesselhut, Wolf
(86) Internationale Anmeldenummer: PCT/EP2021/074020
(87) Internationale Veröffentlichungsnummer: WO 2022/069139

(56) Entgegenhaltungen:
- EP-A1- 0 585 596
- EP-A1- 0 611 173
- CH-A- 412 577
- DE-T2- 69 005 771
- FR-A1- 2 530 424

## Beschreibung

Die Erfindung betrifft eine modulare Presse zum Auspressen von flüssigkeitshaltigem Pressgut, insbesondere von Trauben, gemäß dem Oberbegriff von Anspruch 1, sowie ein Verfahren zum Auspressen von flüssigkeitshaltigem Pressgut unter Verwendung einer solchen Anordnung gemäß dem Oberbegriff von Anspruch 13.

Pressen zum Auspressen von flüssigkeitshaltigen Stoffen sind beispielsweise aus der EP 0 145 948 B1 bekannt und werden dazu verwendet, den als Ausgangsstoff zur Weinherstellung verwendeten Traubensaft aus in die Presse eingefüllten Trauben herauszupressen. Die in der EP 0 145 948 B1 beschriebene Presse weist einen geschlossenen Behälter auf, der um seine waagerechte Längsachse in Rotation versetzbar ist. Im Mantel des Behälters befindet sich eine Einfüll- und Entleeröffnung, die einem auf der gegenüberliegenden Seite des Behälters vorgesehenen Saftablauf gegenüberliegt, und die durch einen Deckel verschließbar ist. Entlang des Durchmesserbereichs des Behälters sind Drainageelemente in Form von flüssigkeitsdurchlässigen Rohren vorgesehen, die sich in einem Pressraum befinden, der durch eine druckmitteldichte, im Inneren des Behälters befestigte, Pressmembran definiert wird, welche den Behälterinnenraum in einen Druckmittelraum und den Pressraum unterteilt.

In der WO 03/035381 A1 wird eine Presse beschrieben, die einen geschlossenen, um seine waagerechte Längsachse in Rotation versetzbaren Behälter umfasst, wobei der Behälterinnenraum durch wenigstens eine Pressmembran in einen Druckmittelraum und einen Pressmittelraum unterteilt wird, und im Behältermantel eine durch einen Deckel verschließbare Einfüll- und Entleeröffnung angeordnet ist. Der Einfüll- und Entleeröffnung ist ein im Pressraum befindlicher Saftablauf gegenüber gelegen. Im Pressraum sind weiterhin über den Durchmesser und im Wesentlichen senkrecht zur Behälterachse angeordnete flüssigkeitsdurchlässige Drainageelemente angeordnet, die sich vom einen Ende des Behälters zum anderen Ende des Behälters hin erstrecken. Die Drainageelemente weisen ein flexibles Stützelement auf, um welches herum ein saftdurchlässiger Gewebeschlauch angeordnet ist. In der Entsaftungsposition erstrecken sich die Drainage-elemente in einer im Wesentlichen vertikalen Richtung, um den Saft in einen unterhalb gelegenen Saft-Sammelstutzen zuzuführen, von wo aus er über eine Sammelleitung einem Sammelbehälter zugeleitet wird. CH 412 577 A offenbart eine bekannte Anordnung zum Auspressen von flüssigkeitshaltigem Pressgut.

Die derzeit auf dem Markt befindlichen pneumatischen Frucht- und Traubenpressen sind in der Regel als fest montierte Baugruppe ausgeführt und bestehen im Wesentlichen aus einem Maschinengestell/Rahmen, an welchem die folgenden Funktions-Unterbaugruppen dauerhaft montiert sind:
- Ein Pressbehälter, welcher ganz oder teilweise mit einer oder mehreren luftundurchlässigen Pressmembranen ausgekleidet ist, die den Pressbehälter in einen Druckmittelraum und einen Produktraum unterteilt, und der zur Befüllung und zur Entleerung der nach der Pressung übrigbleibenden Pressrückstände mit einer manuell oder automatisch betätigten Befüll- und Entleeröffnung versehen ist. Der Pressbehälter ist stets um seine horizontale Achse auf dem Maschinengestell drehbar gelagert.
- Eine in der Herstellung teure und in der Regel störungsanfällige Drehdurchführung, die aufgrund der für die Pressung und Entleerung notwendigen Rotation des Pressbehälters zwingend erforderlich ist, um die für den Betrieb notwendige Medienversorgung mit Druckluft, Strom und ggf. Steuersignalen zu ermöglichen.
- Ein fest montierter Antriebsmotor, welcher den Pressbehälter durch geeignete Getriebe und Maschinenelemente in Rotation versetzen kann.
- Ein Aggregat (so genanntes Vordruck- und Vakuumgebläse) zur Erzeugung eines Unterdrucks und Überdrucks von ca. +/- 100mbar zum Umlegen der Pressmembran.
- Ein Aggregat zur Erzeugung eines Überdrucks von ca. +100mbar bis ca. +1600mbar und in Sonderfällen sogar bis zu 3 bar, welches wahlweise am Maschinengestell montiert ist oder als externer Kompressor inkl. Speichertank Teil der Gesamtinstallation ist.
- Eine pneumatische und elektrische Verbindung der einzelnen Aggregate, Ventile und Rohrleitungen etc., sowie
- eine Maschinensteuerung insbesondere SPS mit einem Bedienelement, welche die Ansteuerung und Visualisierung der für den Betriebsablauf notwendigen Aggregate übernimmt.

Die oben beschriebenen Pressen können in verschiedenen Baugrößen mit Pressbehälter-Volumina von ca. 50 1 bis ca. 50.000 l als einzelne Maschine, oder bei größeren Anlagen in Maschinengruppen aufgestellt und betrieben werden. Dabei spielt die Beschickung der Presse mit Pressgut und der Abtransport der Pressrückstände (Trester) eine zentrale Rolle. Neben der örtlich fixierten Aufstellung mehrerer Pressen können diese auch auf Rollen verfahrbar installiert werden, sodass sich eine Vielzahl von räumlichen Konstellationen ergibt, von denen sich eine linear fixierte Aufstellung hinsichtlich der Beschickung und des Tresterabtransportes als wirtschaftlichste Aufstellungsart etabliert hat.

Ein weiteres Problem der zuvor beschriebenen bekannten Pressen ist darin zu sehen, dass diese in der Regel einen liegenden Pressbehälter besitzen. Der Hintergrund hierfür besteht darin, dass die Pressbehälter aller derzeitig bekannten pneumatischen Pressen aufgrund der notwendigen Rotation, einer möglichst hohen Raumausnutzung und einer möglichst einfachen Fertigung im Wesentlichen als liegende Zylinder ausgeführt sind, wobei ein gewalztes Mantelblech zwischen zwei Böden zum Einsatz gelangt. Dies führt dazu, dass die Pressmembran zwangsläufig als Halbschale ausgeführt ist, wobei je nach Presssystem eine oder auch mehrere Membranen verbaut werden. Allerdings ergeben sich bei den Pressen mit zylindrischen Pressbehältern bedingt durch die Bauform folgende Probleme:
- Schüttkegelbildung des Pressgutes beim Befüllen über die Deckel des Pressbehälters. Aufgrund der länglichen Ausdehnung des zylindrischen Preßbehälters und der begrenzten Anzahl und Größe der Befüll- und Entleerungsöffnungen sowie Deckel bilden sich bei der Befüllung der Presse mit nicht-flüssigem Pressgut Schüttkegel, die die vollständige Befüllung des Produktraumes im Pressbehälter verhindern und nur durch eine Rotation des Pressbehälters vermieden werden können.
- Probleme beim Entleeren der Pressrückstände. Wie bei der Befüllung ist auch bei der Entleerung der Pressrückstände eine nahezu vollständige Entleerung nur durch eine permanente Rotation des Pressbehälters in angemessener Zeit (im Regelfall 10 - 40 Minuten) zu realisieren. Zur Verbesserung der Entleerung werden teilweise zusätzliche spiralförmige Austragselemente, die nach dem Prinzip von Knethaken bzw. Spiralblechen eines Betonmischers arbeiten, eingesetzt, welche neben der Störwirkung für die Pressmembran (sofern auf der Druckmittelseite montiert) eine kontinuierliche und gleichgerichtete Rotation des Pressbehälters erfordern.

Ein weiterer Nachteil der bekannten Pressen besteht zudem darin, dass der Pressbehälter als Druckbehälter gemäß der Druckgeräte-Richtlinie ausgebildet ist. So verwendet der überwiegende Teil der bisher bekannten pneumatischen Pressen für die Erzeugung des zum Auspressen notwendigen Druck-Gradienten atmosphärischen Überdruck (1,2 bis 2 bar, in Sonderfällen bis 3 bar), mit welchem der Druckmittelraum über die Drehdurchführungen etc. beaufschlagt wird. Somit fallen alle mit Druck beaufschlagten Teile des Pressbehälters als Druckbehälter unter die Druckgeräterichtlinie 2014/68/EU; und die Presse als Baugruppe gilt als "Druckgerät" im Sinne dieser Richtlinie. Dies führt neben den erhöhten Kosten für die Herstellung des Pressbehälters in nachteiliger Weise auch zu einmaligen und wiederkehrenden Prüfkosten der notifizierten Stellen, welche neben den installationsseitigen Sicherheitsmaßnahmen mit in die Gesamtwirtschaftlichkeitsrechnung einfließen.

Der kostenintensivste Aspekt bei der Verwendung von hohen Drücken ist die Erzeugung des Druckmediums in entsprechender Menge.

Darüber hinaus muss der Pressbehälter verfahrensbedingt während des Pressvorgangs zum Auflockern des Pressgutes und zum Entleeren der Pressrückstände in Rotation versetzt und dabei die notwendigen Medien zu- und abgeführt werden.

Die Zu- und Abfuhr der Betriebsmedien erfolgt dabei in der Regel über Drehdurchführungen, die üblicherweise folgendes umfassen:
- Druckmittel: zumeist Druckluft (Niederdruck / Hochdruck),
- Steuerluft für die Bewegung der automatischen Verschlüsse der Befüll- und Entleeröffnungen,
- elektrischer Strom für die Bewegung der automatischen Verschlüsse der Befüll- und Entleeröffnungen,
- Signale für Sensoren am oder im Pressbehälter.

Diese zuvor genannten Medien werden dem Pressbehälter bekanntermaßen mittels Drehdurchführungen für Druckluft, Saugluft und Flüssigkeiten, bzw. im Falle der elektrischen Medien/Signale durch Schleifringe zugeführt, bzw. aus diesem abgeführt. Aufgrund der großen Druckmittelvolumina, welche in möglichst kurzer Zeit bewegt werden müssen, sind die Durchmesser der erforderlichen Drehdurchführungen relativ groß und betragen zwischen 50 und 150 mm (DN50 bis DN150), sodass die Herstellungs- und Servicekosten ebenfalls entsprechend hoch sind.

Ein weiteres Problem, welches die Qualität des erzeugten Traubensafts oder allgemein des Pressguts nachhaltig beeinträchtigt, besteht darin, dass der beim Pressvorgang entstehende Saft in einer feststehenden Wanne gesammelt wird, die sich unterhalb des rotierbaren Pressbehälters befindet. Je nach Ausführung der Presse wird der Saft zuvor im oder am Pressbehälter aus mehreren Saftabläufen zusammengeführt und während der Rotation bzw. bei Behälter-Stillstand am tiefsten Punkt per Gravitation in die feststehende Wanne geleitet. Dabei ist es zwingend erforderlich, dass der Saft die Strecke zwischen Pressbehälter, eventueller Leitbleche bis zur Wanne im freien Fall überwindet, da die erforderliche Rotation des Pressbehälters keine abgeschlossene Rohrverbindung erlaubt.

Nachteilig an dieser gravitativen Entleerung des Saftes in die Saftwanne ist dabei die mangelnde Prozesskontrolle, die beispielsweise zu einem Spritzen und Schwappen führt, sowie die unkontrollierte Einwirkung der Umgebungsluft (Oxidation, Temperatur etc.), bzw. die mögliche Verschmutzung durch Staub und insbesondere Insekten, die durch den hohen Zuckergehalt des erzeugten Traubensafts vermehrt angezogen werden und häufig in der Saftwanne verenden.

Um dem entgegen zu wirken ist es zwar bekannt, Kupplungsmechanismen einzusetzen, die im Falle einer zentralen Sammlung des Safts am oder im Pressbehälter den Saft in einer entsprechenden Stellung des Pressbehälters am tiefsten Punkt durch ein mechanisches Ankuppeln, z.B. durch eine bei der Traubenpressung unter Inertgas verwendete Inertgas-Kupplung, unter weitestgehendem Ausschluss von Umgebungsluft zu einer Sammelwanne leiten. Diese Möglichkeit ist jedoch sehr kosten-, reinigungs- und störungsintensiv.

Eine weitere Unzulänglichkeit, die sich durch die zuvor beschriebene gravitative Ableitung des gepressten Traubensafts aus dem Pressbehälter ergibt, besteht darin, dass sich dadurch die Bauhöhe der Presse insgesamt maßgeblich vergrößert. Aufgrund der oben beschriebenen Bauweisen erhöht das gravitative Ableiten und zentrale Sammeln des Produktes innerhalb einer Sammelwanne die Gesamthöhe der Presse um ca. 300 bis 1000 mm, was beim Aufstellen eine vergrößerte Gebäudehöhe erfordert und dadurch bei bestehenden Gebäuden oftmals zu Problemen führen kann.

Neben der vergrößerten Bauhöhe besitzen die zuvor beschriebenen Pressen konstruktionsbedingt einen erhöhten Platzbedarf. Dies ist darauf zurück zu führen, dass der Pressbehälter, der mit ca.75 - 85% den größten Teil des Aufstellungsraumes einnimmt, ständig mit dem Rahmen und den daran aufgenommenen Baukomponenten verbunden ist. Bei mehreren Pressen addiert sich hierzu der Bauraum, der für die Versorgungsaggregate benötigt wird, welche für jede einzelne Presse notwendig sind.

Weiterhin ergibt sich das Problem, dass neben der auf das Jahr gesehen sehr geringen Nutzung der Pressen auch während der Pressung die Nutzung der verbauten Aggregate aufgrund des nicht kontinuierlichen Pressvorganges relativ gering ist. Die führt dazu, dass der Antriebsmotor für die Behälter-Rotation nur ca. alle 3 - 5 Minuten für ca. 2 Minuten in Betrieb ist. Bei entsprechenden Pressprogrammen vergrößert sich das Intervall mitunter sogar auf alle 15 - 30 Minuten, was einer Auslastung von lediglich ca. 10 - 40 % entspricht. Ferner wird das Aggregat zum Umlegen der Membran in der Regel ebenfalls nur ca. alle 3-5 Minuten für ca. 2 Minuten in Betrieb genommen, was einer Auslastung von ca. 30 - 40 % entspricht. Darüber hinaus sind die Steuerung (SPS) und das HMI für die Automatisierung und Visualisierung des Prozesses ebenfalls nur teilweise ausgelastet (ca. 30 %).

Wie die Anmelderin weiterhin erkannt hat, entsteht eine weitere Unzulänglichkeit dadurch, dass die Presse als Maschine innerhalb des Produktionsprozesses eingesetzt wird und in einem diskontinuierlichen Verarbeitungsprozess betrieben wird. In diesem Zusammenhang ist allen pneumatischen Pressen mit Pressbehälter gemeinsam, dass der systembedingte Verarbeitungsprozess, die nachfolgenden Arbeitsschritte umfasst:
1. Befüllung (Dauer: zwischen 2 Minuten und 2 Stunden)
2. Pressvorgang (Dauer: zwischen 60 Minuten und 4 Stunden)
3. Entleerung der Pressrückstände (Dauer: zwischen 10 und 30 Minuten)
4. Reinigung des Pressbehälters (Dauer: zwischen 15 und 30 Minuten im Falle einer Schnellreinigung)

Nach einer Befüllung der Presse kann demnach für ca. 2 - 6 Stunden keine weitere Befüllung der Presse erfolgen. Im Falle einer kontinuierlichen Pressgut-Anlieferung kann mit einer einzelnen Presse folglich nicht kontinuierlich gearbeitet werden. In der Praxis muss für eine kontinuierliche Verarbeitung eine der Befüll-Leistung angepasste Anzahl von Pressen und ein entsprechend variables Befüll-Transportsystem bereitgestellt werden. So wurde von der Anmelderin gefunden, dass für die Erreichung einer kontinuierlichen Befüllung z.B. 6 - 7 Pressen erforderlich sind, um sicher zu stellen, dass die erste Presse nach ca. 4 Stunden wieder befüllt werden kann.

Einen weiteren Nachteil der bisher bekannten Pressen stellt die temporäre monofunktionale Nutzung der Pressen dar. So werden die Pressen innerhalb des gesamten Produktionsprozesses der Pressgutverarbeitung lediglich für die Pressung, d.h. die Trennung der flüssigen Bestandteile von den festen Bestandteilen des Pressguts (im Lebensmittelbereich: Trauben, Kräuter, Früchte, Obst etc.) eingesetzt, welcher bei der Traubenverarbeitung während der Lesezeit (ca. 4 - 6 Wochen pro Jahr) 1 bis 4 mal pro Tag stattfindet. Gelegentlich findet die Presse auch für den Mazerations-Vorgang (temporäre Lagerung/Einwirkung der Traubenmaische vor der Pressung für ca. 3 - 20 Stunden) Verwendung. Die restliche Zeit während der Lese bzw. des Jahres sind die Pressen inklusive des Behältervolumens ungenutzt. Weitere Einsatzmöglichkeiten innerhalb des Produktionsprozesses sind aufgrund der geschlossenen Bauweise als komplett-Baugruppe nur begrenzt bis gar nicht möglich.

Schließlich besteht ein Problem der bekannten Pressen darin, dass die Verarbeitungskapazität aufgrund ihres Aufbaus in erster Linie durch die Größe des Pressbehälters bestimmt werden, was die Möglichkeit einer Anpassung der Verarbeitungskapazität bei einer bestehenden Presse in der Regel ausschließt. Allerdings stellen bei der Dimensionierung einer Verarbeitungsanlage die Wahl der Pressengröße und die Anzahl der verwendeten Pressen einen entscheidenden Bestandteil der Wirtschaftlichkeitsbetrachtung dar, sodass die Verarbeitungskapazität einer Presse nach Möglichkeit so gut wie möglich auf die anfallende Menge an zu verarbeitendem Pressgut abgestimmt sein sollte. Dabei ist das Zusammenspiel von Verarbeitungsart, Anliefermenge, Dauer und Art der Presszyklen, Tresterabtransport, Reinigung und Platzbedarf genau auf den gewünschten aktuellen und zukünftigen Bedarf eines Betriebes abzustimmen. Beispielsweise führt der Einsatz von zu großen Pressen, welche nur teilweise befüllt werden können zu erhöhten Anschaffungskosten sowie einem erhöhten Zeit- und Energiebedarf. Zugleich kann die Konstanz der Verarbeitung des Pressgutes bei nicht hinreichend gefüllter Presse nicht gewährleistet werden. Die Auslastung der vorhandenen Pressen ändert sich zudem aufgrund der z.B. witterungsbedingt schwankenden Annahme-Mengen an Pressgut, sodass Kleinmengen vorteilhafterweise nur mit kleineren Pressen verarbeitet werden, was den Einsatz unterschiedlicher Pressengrößen erfordert.

Erweiterungen der Presskapazitäten sind darüber hinaus meist nur durch den Einsatz zusätzlicher Pressen möglich, was zu teilweise erheblichen baulichen Veränderungen und damit verbundenen Kosten führt.

Der Nachteil, dass mehrere Pressegrößen für unterschiedliche Verarbeitungsmengen/Sortierungen notwendig sind, führt weiterhin zu einer geringeren Auslastung oder gar zu Verarbeitungsengpässen, da der Prozess der Lese des Pressguts naturbedingt nicht genau genug gesteuert werden kann.

Demgemäß ist es eine Aufgabe der vorliegenden Erfindung, eine Anordnung zu schaffen, welche die zuvor beschriebenen Unzulänglichkeiten des Standes der Technik vermeidet.

Diese Aufgabe wird erfindungsgemäß durch eine Anordnung mit den Merkmalen von Anspruch 1 gelöst.

Eine weitere Aufgabe der Erfindung ist es, ein Verfahren zum Auspressen von flüssigkeitshaltigen Stoffen, insbesondere Trauben und Früchten, unter Verwendung einer solchen Anordnung anzugeben.

Diese Aufgabe wird durch ein Verfahren mit den Merkmalen von Anspruch 13 gelöst.

Eine abermals weitere Aufgabe besteht darin, eine neuartige Verwendung für einen in der Anordnung eingesetzten mobilen Pressbehälter anzugeben.

Diese Aufgabe wird durch eine Verwendung mit den Merkmalen von Anspruch 14 gelöst.

Die Anordnung umfasst unter anderem die folgenden Komponenten:
- wenige mobile Einheitspressbehälter bevorzugt in kurzzylindrischer, kubischer oder annähernd kugelförmiger Form, welche leicht bewegbar sind und eine möglichst - geringe Grundausstattung aufweisen, die vorzugsweise lediglich die Membran, ein Drainage-Element, sowie die Befüll- und Entleer-Öffnung umfasst,
- eine Wendeeinrichtung zur Durchführung der erforderlichen Rotationsbewegung der Pressbehälter während des Pressvorgangs, des Entleervorgangs und des Reinigungsvorgangs,
- bevorzugt eine zentrale Medienversorgung für die Zufuhr von Druckluft, Unterdruck, und Steuerluft.

Durch die Verwendung mehrerer Module, d.h. mehrerer Wendeeinrichtungen in Verbindung mit einer Vielzahl darin einsetzbarer mobiler Pressbehälter, kommt eine Mehrleistung zustande.

Hierbei wird als "Modul" im Folgenden die Einheit zur Traubenverarbeitung (Befüllung, Pressung, Entleerung, Reinigung) mit den folgenden Bestandteilen bezeichnet:
- einer oder mehreren Rotations-Aufnahmen mit jeweils einer Medien-Kupplung mit einer variablen Anzahl von mobilen Press-, Lager-, und Transportbehältern, die nachfolgend auch als Wendeeinrichtungen bezeichnet werden,
- einer oder mehreren Antriebseinheiten für den Antrieb der Wendeeinrichtungen
- einer zentralen Steuerung für die Steuerung der Aggregate und Ventile in den jeweiligen Verarbeitungs-Phasen,
- einer oder mehreren Saft-Bereitstellungen pro Pressbehälter an einem festen Punkt (Saftsammelbehälter oder Rohrauslauf)
- einer oder mehreren Aggregaten zur Bereitstellung des notwendigen Druckgefälles (Überdruck / Unterdruck),

Durch den Einsatz der erfindungsgemäßen Anordnung ergeben sich die folgenden Vorteile:
- schnellstmöglicher Start eines Pressprogramms
- schnellstmögliche Entleerung
- Qualitätsverbesserung durch optimale Füllmenge
- bessere Ausnutzung der Antriebs- und Versorgungseinheit
- geringerer elektrischer Leistungsbedarf
- höhere Betriebssicherheit durch Verwendung standardisierter Elemente
- kontinuierliches Arbeiten mit einer ausreichenden Anzahl von Presskörpern möglich
- Mazerieren und Temperieren ist auch in kleineren Mengen und an verschiedenen Orten eines Verarbeitungsbetriebes möglich,
- Mobilität und Verwendung des mobilen Pressbehälters
   o als Sammelbehälter im Weinberg, welcher bei der Lese direkt befüllt wird, und danach z.B. mittels eines Traktors mit Frontlader auf einen Transportanhänger verladen wird,
   ∘ als Behälter zur Lagerung von Wein, bevorzugt nach dem Keltern und vor dem Abfüllen in Flaschen,
   o als Gärtank,
   o als Behälter zum direkten Abfüllen von vergorener Rotweinmaische,
   o als Druckbehälter, der zur Bereitstellung von Druckgas verwendet werden kann.

Wie von der Anmelderin erkannt wurde, ermöglichen kleinere einheitlich ausgeführte mobile Pressbehälter, die z.B. ein Fassungsvermögen zwischen 400 1 und 4000 1 besitzen können, eine sofortige und ggf. ständige Auslastung der Presskapazität ohne Leseplanung und Wissen über die voraussichtliche Tagesmenge, da die Trauben unverzüglich nach der Anlieferung nach einem festen Rhythmus verarbeitet werden können. Ein weiterer Vorteil ist darin zu sehen, dass der Anlieferprozess durch die Möglichkeit eines kontinuierlichen Arbeitens nicht unterbrochen werden muss.

Erfindungsgemäß besteht ein Kerngedanke der erfindungsgemäßen Anordnung darin, dass den bekannten Traubenpressen zugrunde liegenden System einer unlösbaren Einheit von Gestell, Pressbehälter und Energieversorgung in Einzelsysteme aufzulösen.

Hierdurch ergibt sich eine erfindungsgemäße Anordnung zum Auspressen von flüssigkeitshaltigem Pressgut, Komponente gemäß Anspruch 1 umfasst.

Die mobilen Pressbehälter können gewünschten Falls auch zur Lagerung und zum Transport der Trauben, dem flüssigen Saft oder von Wein nach dem Pressvorgang verwendet werden.

Bei einer bevorzugten Ausführungsform der Erfindung bei der die Vor- und Zurückrotation ohne den Einsatz einer teuren und aufwendig zu reinigenden Drehdurchführung vorgenommen werden kann, umfasst die Anordnung einen flexiblen Schlauch, der während des Verschwenkens des Pressbehälters dauerhaft mit dem mobilen Pressbehälter und dem Saftsammelbehälter strömungsmäßig verbunden ist, sodass der mobile Pressbehälter in der Wendeeinrichtung in den zuvor beschriebenen begrenzten Winkelbereichen rotiert werden kann, während der flexible Schlauch mit dem Saftablauf am Behälter verbunden ist und über den Schlauch eine Strömungsverbindung zum Saftsammelbehälter hergestellt ist, die von der Umgebungsluft getrennt ist. Dies schließt mit ein, dass der flexible Schlauch mit seinem stromabwärtigen Ende mit einem Anschlussblock oder allgemein mit einem zentralen Kupplungselement verbunden ist, welches z.B. gestellfest an der Wendeeinrichtung aufgenommen sein kann, und welches selbst an einen zentralen Saftsammelbehälter angeschlossen ist, in den der flüssige Saft eingeleitet wird.

Bevorzugter Weise sind neben dem flexiblen Schlauch auch die Druckluft- und/oder Unterdruckzuleitungen sowie auch die Datenleitungen und elektrischen Zuleitungen für ggf. am Pressbehälter angeordnete Sensoren und Aktuatoren über das zentrale Kupplungselement mit der Wendeeinrichtung verbunden und bei der Pressung permanent an dem sich drehenden Pressbehälter fixiert. Die zentralen Kupplungselemente, bzw. Anschlussblöcke ermöglichen es ferner, dass bei der Verwendung der mobilen Pressbehälter als Transport- oder Lagerbehälter die Verbindung zum Behälter schnell demontiert werden kann. Insgesamt können durch den Einsatz des zuvor beschriebenen zentralen Kupplungselements somit die Drehdurchführungen für die Betriebsmedien (Druckluft, Strom, Signal auf Behälter) und die Produkt-Abführung (Saft) in vorteilhafter Weise entfallen.

Durch die Begrenzung der Rotation der mobilen Pressbehälter, bzw. der Aufnahmen für diese in der Wendeeinrichtung auf bevorzugt 180 ° + ca. 45 ° in der einen Drehrichtung und 180 ° - 45 ° in der entgegengesetzten Drehrichtung während des Pressvorgangs ergibt sich weiterhin zum einen die Möglichkeit einer hocheffizienten Auflockerung des Pressguts zwischen zwei Pressvorgängen und zum anderen eine hinreichend geringe Belastung des flexiblen Schlauchs während der Vor- und Rückwärtsrotation der mobilen Pressbehälter in der Wendeeinrichtung, wodurch sich die Lebensdauer der flexiblen Schläuche, die z.B. aus einem gummiartigen, bevorzugt gewebeverstärkten lebensmittelverträglichen Material bestehen können, sowie auch der übrigen Versorgungsleitungen in vorteilhafter Weise erhöht. Der Rotationswinkel wird bevorzugt über Anschläge begrenzt, wodurch beim Einsatz von Elektromotoren oder sonstigen elektrischen Stellantrieben oder pneumatischen Stellantrieben ein wohl definierter Drehwinkel vorgegeben wird.

In gleicher Weise wie die Abfuhr des Safts über den flexiblen Schlauch erfolgt die für jeden Behälter notwendige Energie- und Medien- Zuführung erfindungsgemäß ebenfalls über die Wendeeinrichtung, insbesondere den an dieser aufgenommenen Anschlussblock.

Der oder die mobilen Pressbehälter bleiben nach der Kopplung mit der Wendeeinrichtung über eine leicht lösbare Verbindung, insbesondere einen Anschlussadapter, der an den Anschlussblock nach Art einer Schnellkupplung anschließbar ist, während des gesamten Befüll-, Press-, Entleer- und Reinigungsvorgangs zumindest über den flexiblen Schlauch mit dem Saftsammelbehälter, bzw. einer Druckluft-, bzw. ggf. auch Unterdruckquelle verbunden; Hierbei können die Überdruck- und ggf. Unterdruckquellen zur Versorgung mehrerer Wendeeinrichtungen nicht nur zentral und ortsfest ausgeführt sein, sondern es kann alternativ an jeder Wendeeinrichtung eine eigene Überdruck-/Unterdruckquelle angeordnet werden, was insbesondere bei einer Ausführung der Wendeeinrichtungen als mobile Einheiten von Vorteil ist. Von besonderem Vorteil kann es hierbei sein, wenn die Druckmittelräume von mehreren mobilen Pressbehältern, die z.B. nebeneinander in einzelnen mobilen Wendeinrichtungen oder in einer gemeinsamen Wendeeinrichtung zur gleichzeitigen Aufnahme mehrerer mobiler Pressbehälter eingesetzt sind, über Verbindungsleitungen und dazwischen geschaltete Ventile miteinander verbindbar sind. Hierdurch eröffnet sich die Möglichkeit, dass nach einem ersten Pressvorgang in einem ersten mobilen Pressbehälter die in dessen Druckmittelraum befindliche Druckluft direkt in den Druckmittelraum eines benachbarten zweiten Pressbehälters eingeleitet werden kann, um die Membran in diesem für einen durchzuführenden Pressvorgang mit Druckgas zu beaufschlagen, ohne dieses in energieaufwendiger Weise durch einen Kompressor oder ein Gebläse erzeugen zu müssen. Hierdurch lassen sich erhebliche Energiekosten zur Bereitstellung des Druckgases einsparen.

Das im Druckmittelraum des zweiten mobilen Pressbehälters befindliche Druckgas kann nach dem anschließend erfolgenden Pressvorgang, bei dem in der Regel zusätzliches Druckgas/Druckluft mit erhöhtem Druck in den zweiten Druckmittelraum eingeblasen wird, durch wechselweises Öffnen und Schließen der Ventile über die Verbindungsleitung wieder in den Druckmittelraum des ersten mobilen Pressbehälters zurückgeleitet werden, nachdem dieser zwischenzeitlich zur Auflockerung des Pressguts in Rotation versetzt wurde und für den nächsten Pressvorgang bereit steht.

Weiterhin können die Antriebsvorrichtungen zum Rotieren der mobilen Pressbehälter in den Wendeeinrichtungen so ausgeführt sein, dass einer oder mehrere Behälter innerhalb einer Wendeeinrichtung mit einem oder mehreren Antriebsaggregaten in Rotation versetzt werden können, und zwar bevorzugt unabhängig voneinander, sodass jeder in die Wendeeinrichtung eingesetzte mobile Pressbehälter entsprechend der vorgegebenen Abfolge von Rotations- und Pressvorgängen, bzw. des abschließenden Entleerungsvorgangs, individuell in die eine oder andere Richtung rotiert werden kann.

Erfindungsgemäß ist zur Steuerung der Antriebsvorrichtungen und auch der Druckgas-/Unterdruckgellen sowie der sonstigen Aktuatoren und Sensoren eine zentrale Steuerungseinrichtung vorgesehen, an die bevorzugt auch die Sensoren angeschlossen sind, welche die Drehwinkel der mobilen Pressbehälter während des Pressvorgangs, sowie auch den Druck im Druckmittelraum, die Temperatur und sonstige Prozessparameter erfassen. Die Steuerungseinrichtung ist vorteilhafter Weise als speicherprogrammierbare Steuerungseinrichtung (SPS) ausgeführt.

Bei einer bevorzugten Ausführungsform der Anordnung sind die mobilen Pressbehälter in eine eigene mobile Wendeeinrichtung einsetzbar, in welcher diese individuell rotiert werden, um die vorgegebenen Prozessschritte während des Pressens durchzuführen. Das Einsetzen der mobilen Pressbehälter kann dabei z.B. mit Hilfe eines Gabelstaplers oder Frontladers erfolgen, dessen Hubzinken in zwei am Boden der mobilen Pressbehälter angeordnete Aufnahmeöffnungen eingeführt werden, um die Behälter nach dem Beladen mit Pressgut bevorzugt seitlich in ein entsprechendes Aufnahmegestell der Wendeeinrichtung einzuschieben, in der sie durch entsprechende mechanische Sicherungsmittel, z.B. eine in entsprechende Aufnahmen des Gestells der Wendeeinrichtung einzuhängende Querstange gesichert werden.

Diese Ausführungsform zeichnet sich dadurch aus, dass die Wendeeinrichtung nach dem Einsetzen des mit Pressgut gefüllten mobilen Pressbehälters in die örtlich verfahrbaren Wende-Einrichtungen und nach dem Verbinden der Medienleitungen, insbesondere des flexiblen Schlauchs mit dem Saftsammelbehälter, von der Befüllposition zur Pressposition, von dieser zur Entleerposition und danach zur Reinigungsposition bewegt werden. Dabei können alle mobilen Pressbehälter an einer festen Position befüllt werden, und nach der Befüllung erfolgt eine linear-horizontale oder linear-ansteigende oder horizontalkreisförmige Bewegung des, bzw. der Behälter zusammen mit einer Wendeeinrichtung zur nächsten Position. Optional können die Behälter auch aus der Wendeeinrichtung entnommen und mittels eines Staplers oder dergleichen zur nächsten Position verbracht werden.

Nach der Durchführung eines Pressvorgangs werden die mobilen Pressbehälter (zusammen mit oder ohne eine Wendeeinrichtung) zu einer festen Entleerposition bewegt und dort z.B. auf ein unterhalb der Behälter laufendes Transportband entleert, indem der Deckel zum Verschließen der Befüll- und Entleeröffung geöffnet und der Behälter in der Wendeeinrichtung soweit rotiert wird, dass die während des Befüllvorgangs obenliegende Befüll- und Entleeröffnung auf der Unterseite angeordnet ist.

Nach der Entleerung werden die mobilen Pressbehälter zusammen mit oder ohne eine Wendeeinrichtung zu einer Reinigungsposition bewegt, und der Innenraum eines jeden Behälters mittels einer Sprüheinrichtung oder dergleichen gereinigt. Nach der Reinigung werden die Behälter dann zusammen mit der oder ohne die Wendeeinrichtung wieder zur Befüllposition bewegt, in der diese in die stehende Befüllposition mit obenliegender Befüll- und Entleeröffnung rotiert und von oben her mit frischem Pressgut befüllt werden.

Die bevorzugte Ausführungsform des mobilen Pressbehälters, der insbesondere als Lager- und Transport-Behälter, bzw. als Druckspeicherbehälter verwendet werden kann, ist möglichst kugelförmig ausgeführt. Dieser kann eine kurzzylindrische Form, oder alternativ eine kubische, bzw. eine reine Kugelform besitzen. Eine weitere alternative Ausführungsform des mobilen Pressbehälters, die einen in der Aufsicht ovalen Querschnitt mit konvex ausgestellten Seitenwänden aufweist, besitzt den Vorteil, dass sich diese fertigungstechnisch in besonders einfacher Weise aus lediglich vier einzelnen, in Form gebogenen Wandbauteilen zusammen setzten lässt, deren Seitenränder zu den Zentren der konvex ausgestellten Seitenwände hin nach Art von konvexen Rhomben zusammenlaufen und zur Erzeugung der gewölbten rhombenartigen Struktur entlang der aneinandergrenzenden Seitenränder verschweißt sind. Wie von der Anmelderin erkannt wurde, besitzen diese zuletzt beschriebenen Ausführungsformen den Vorteil, dass die dreidimensionale Einleitung der Druckkraft auf die jeweiligen Pressgutbestandteile verbessert wird. Nach einem weiteren der Erfindung zugrunde liegenden Gedanken, kann es vorgesehen sein, dass das Pressgut durch eine Kombination aus einem auf den Pressmittelraum (Produktraum) wirkenden Unterdruck und einem reduzierten Überdruck von weniger als 0,5 bar, der dem Druckmittelraum zugeführt wird, gepresst wird.

Der Vorteil dieser Ausführungsform ist darin zu sehen, dass die Druckbehälterrichtlinien erst ab einem Überdruck von mindestens 0,5 bar Anwendung finden, wohingegen für die Beaufschlagung von Druckbehältern mit Unterdruck in den meisten Ländern keine Regularien existieren, sodass die Behälter nicht mehr in regelmäßigen Zeitabständen behördlich in Hinblick auf die geforderte Druckfestigkeit geprüft werden müssen.

Darüber hinaus kann es bei einer weiteren Ausführungsform der Erfindung ferner vorgesehen sein, den Pressbehälter zum Pressen des Pressguts mit einer Kombination aus Unterdruck und Überdruck zu beaufschlagen.

Eine solche bevorzugte Ausführungsform der Erfindung zeichnet sich dadurch aus, dass die mobilen Pressbehälter der Anordnung mit einer flüssigkeitsdichten Membran ausgekleidet sind, welche den jeweiligen Behälter in einen Druckmittelraum und einen Pressmittelraum unterteilt, innerhalb dessen sich ein oder mehrere Drainage-Elemente befinden. Anders als bei den eingangs erwähnten Membranpressen nach der WO 03/035381 A1 wird die für das Auspressen des Pressguts notwendige Druckdifferenz zwischen Druckmittelraum und der Ausgangsseite des Drainage-Elementes durch eine Kombination aus Überdruck im Druckmittelraum und Unterdruck an der Ausgangsseite, bzw. im Inneren des Drainageelements herbeigeführt. Dabei wird der Druckmittelraum in vorteilhafter Weise mit einem typischen Maximaldruck (gegenüber Atmosphäre) von weniger als 0,5 bar beaufschlagt; und der Innenraum des, bzw. der Drainageelemente, bzw. der oder die Saftabläufe, mit einem typischen Unterdruck von -0,5 bar bis -0,9 bar, sodass sich insgesamt eine typische Maximaldruckdifferenz von ca. 1,2 bar bis 1,4 bar einstellt, die an der Pressmembran anliegt.

Durch diese Kombination aus einem Überdruck von weniger als 0,5 bar im Druckmittelraum und einem Unterdruck von bis zu - 0,9 bar im Pressmittelraum, bzw. innerhalb des Drainageelements eröffnet sich die Möglichkeit, die mobilen Pressbehälter der erfindungsgemäßen Anordnung, die auch als Transport oder Lagerbehälter verwendet werden können, aus Kunststoff oder einem anderen nichtmetallischen Werkstoff, oder aber einer Kombination solcher Werkstoffe zu fertigen. Hierdurch lassen sich die Fertigungskosten erheblich reduzieren und die periodisch anfallenden beachtlichen Kosten für Druckprüfungen vermeiden, die beispielsweise in der Bundesrepublik Deutschland bei Druckbehältern erforderlich sind, welche Drücken von mehr als 0,5 bar standhalten müssen.

Eine mögliche Ausführungsform eines solchen Pressbehälters aus Kunststoff, welcher zum Transport in einem Metallgestell aufgenommen ist, sind sogenannte IBCs ("intermediate bulk container"). Diese vergleichsweise günstigen Behälter weisen typischerweise ein Volumen zwischen 500 1 und 3000 1 auf und eignen sich, wie die Anmelderin erkannt hat, zur Verwendung als zuvor beschriebener Druckbehälter.

Ein weiterer Vorteil, der sich durch diese Ausführungsform der Erfindung ergibt, ist darin zu sehen, dass der eigentliche Pressbehälter durch die den Pressmittelraum, d.h. den Raum, in welchem das Pressgut aufgenommen ist, abschließende Pressmembran nicht mit Unterdruck beaufschlagt wird. Dadurch können bei der erfindungsgemäßen Anordnung die Druckbehälter, bzw. mobilen Pressbehälter, wenn diese aus Metall gefertigt sind, in vorteilhafter Weise mit geringeren Wandstärken ausgeführt werden, was die Fertigungskosten abermals verringert.

Eine weitere Ausführungsform einer solchen bevorzugten erfindungsgemäßen Anordnung mit einem Pressbehälter aus einfachem Kunststoffmaterial, wie es z.B. für Kunststofffässer eingesetzt wird, umfasst einen tonnenförmigen mobilen Pressbehälter aus Kunststoff, der ähnlich dem zuvor beschriebenen Pressbehälter aus Kunststoff in einem Stützgestell mit angedeuteten umfänglichen Verstärkungs-, bzw. Stützringen aus Metall aufgenommen ist. Dadurch wird eine hinreichende Druckfestigkeit des tonnenförmigen Pressbehälters erreicht, welcher einem Überdruck von maximal 0,5 bar standhält. Der tonnenförmige oder zylindrische Behälter, der nicht nur als mobiler Pressbehälter, sondern z.B. auch als Lagerbehälter für das Pressgut oder den Saft ausgeführt sein kann, stützt sich über die Verstärkungsringe oder auch über stirnseitige Stützflansche auf vier oder mehr Rollen eines Tragrahmens einer Wendeeinrichtung ab, von denen bevorzugt eine Rolle aus einem gummielastischen Werkstoff besteht und über einen Motor angetrieben wird, um den Pressbehälter nach seiner Befüllung mit Pressgut während eines Presszyklus bevorzugt durch den Antriebsmotor in die eine oder andere Richtung zu rotieren. Die Verstärkungsringe können weiterhin über koaxiale Stäbe zu einem korbartigen Stützgestell verbunden sein.

Der bevorzugt eingesetzte flexible Schlauch für die Ableitung des flüssigen Safts ist bei dieser Ausführungsform mit seinem stromaufwärtigen Ende z.B. über eine bekannte Flanschverbindung mit dem Saftablauf verbunden, wobei der flexible Schlauch gleichzeitig auch die Druckluftzuleitung sowie die Unterdruckzuleitung und ggf. Sensor- und Elektroleitungen enthält, die beim Schließen der Flanschverbindung sozusagen automatisch mit angeschlossen werden. Das andere stromabwärtige Ende des flexiblen Schlauchs, der bei der Vor- und Zurückdrehung des Behälters umfänglich entlang einer koaxial zur Längsachse des zylindrischen Pressbehälters angeordneten Schlauch-Wickelbahn gewickelt wird, die vorteilhaft an einem der stirnseitigen Stützflansche geformt ist, ist mit einem Anschlussblock oder allgemein mit einem zentralen Kupplungselement verbunden, welches - wie bereits zuvor beschrieben - z.B. gestellfest an der Wendeeinrichtung aufgenommen sein kann. Das zentrale Kupplungselement kann selbst an einen zentralen Saftsammelbehälter angeschlossen sein, in den der flüssige Saft eingeleitet wird. Bevorzugter Weise sind neben dem flexiblen Schlauch auch die Druckluft- und/oder Unterdruckzuleitungen sowie auch die Datenleitungen und elektrischen Zuleitungen für ggf am Pressbehälter angeordnete Sensoren und Aktuatoren über das zentrale Kupplungselement mit der Wendeeinrichtung verbunden und bei der Pressung permanent am sich drehenden Pressbehälter fixiert.

Die Stütz- bzw. Verstärkungsringe des mobilen Pressbehälters, der alternativ auch aus einem flexiblem Material, insbesondere einer mit Gewebe verstärkten druck- und reißfesten Kunststofffolie oder Plane gefertigt sein kann, können neben ihrer Stütz- und Stabilisierungsfunktion gleichzeitig oder alternativ auch als Lauffläche dienen, auf denen die Rollen, auf denen der Behälter rotiert, entlang laufen. Hierdurch eröffnet sich die Möglichkeit, den Behälter durch weitere Rollen in der Mitte zu stützen, was auch den Einsatz von größeren mobilen Pressbehältern mit einer Länge von z.B. 5 m ermöglicht, die in die Wendeeinrichtung eingelegt werden.

Weiterhin besitzt der Pressbehälter verminderter Druckfestigkeit gemäß einer weiteren Ausführungsform eine zylindrische Form mit zwei diametral gegenüberliegenden abgeplatteten Umfangsabschnitten, in denen die Befüll- und Entleeröffnung sowie der Saftablauf angeordnet sind. Durch diese Ausgestaltung des Druckbehälters, die nur durch die zuvor beschriebene gleichzeitige Kombination von Unterdruck von bis zu -900 mbar im Pressmittelraum und Überdruck von weniger als 0,5 bar im Druckmittelraum ermöglicht wird, ergibt sich der Vorteil, dass das als Produktmittelraum nutzbare Behältervolumen bei einem vorgegebenen Durchmesser des zylinderförmigen Behälters verminderter Druckfestigkeit vergrößert ist. Dies ist damit begründet, dass der sonst bei Druckbehältern, die im Querschnitt mit Ausnahme des Saftablaufs und der Befüll- und Entleeröffnung stets kreisförmig sein müssen, um die hohen Druckkräfte aufnehmen zu können, zusätzliche Höhenbedarf für den Saftablauf und den Flansch der Befüll- und Entleeröffnung eingespart werden kann, welche in vorteilhafter Weise in den Umfang des Behälters integriert sein können. Hierbei ist es von besonderem Vorteil, wenn der Saftablauf unmittelbar unterhalb des abgeplatteten Umfangsabschnitts geformt ist. Zur Außenseite hin kann durch ein aufgesetztes Zylinderumfangssegment, welches sich parallel zur Zylinderlängsachse erstreckt, eine Saftablaufrinne begrenzt werden, welche bei der Anordnung von mehreren Drainageelementen im Innenraum des Pressbehälters für einen Saftablauf zum zentral angeordneten Saftablaufstutzen sorgt.

Eine mögliche Ausführungsform für eine Aufnahme und Verriegelung eines zu Anfang beschriebenen mobilen (druckfesten) Pressbehälters der erfindungsgemäßen Anordnung in einer Wendeeinrichtung sieht vor, dass der mobile Pressbehälter über geeignete Halteelemente verfügt, die beispielsweise als Laschen oder Halteösen ausgeführt sein können, welche das Einsetzen desselben in die Wendeeinrichtung mit einem geeigneten Hebegerät sowie das nachfolgende Arretieren des Behälters in der Wendeeinrichtung ermöglichen. Ebenso ist es möglich an der Wendeeinrichtung zwei parallele Führungsschienen vorzusehen, auf welchen der mobile Pressbehälter über entsprechende seitliche Laschen oder komplementäre Gleitelemente seitlich in die Entstellung in der Wendeeinrichtung geschoben werden kann, z.B. mittels der Hubzinken eines Gabelstaplers, die in eine Öffnung im Bodenabschnitt der mobilen Pressbehälter einführbar sind.

Weiterhin kann es bei einer weiteren Ausführungsform der Erfindung vorgesehen sein, dass die Befüll- und Entleeröffnung durch einen schwenkbaren Deckel verschließbar ist, an dessen Schwenkachse das Ende eines unterhalb der Öffnung angeordneten zentralen Drainageelements fixiert ist. Diese Ausführungsform zeichnet sich dadurch aus, die drehbewegliche Fixierung des zentralen Drainage-Elements an der Schwenkachse des Schwenkdeckels ein Öffnen des Schwenkdeckels erlaubt, ohne das Drainage-Element zuvor auszubauen.

Zur Abdichtung des schwenkbaren Deckels, der auf der einen Seite der Schwenkachse in die Befüll- und Entleeröffnung hinein, und auf der gegenüberliegenden Seite aus dieser herausbewegt wird, kann eine Dichtung vorgesehen sein, die aus einem einfachen Ring aus elastischem Material besteht, welcher auf ein kreisförmiges Element (U-Profil) gestülpt wird und sich beim Schließen des Deckels an die Wandung der Deckelöffnung am Behälter anlegt. Hierdurch wird der Deckel durch Vorsehen einer geringfügigen Exzentrizität der Drehachse bei der Verwendung von Überdruck im Produktraum in vorteilhafter Weise selbstverstärkend an die Dichtung, bzw. einen am Pressbehälter geformten Anschlag gedrückt, was eine zuverlässige Abdichtung des Pressbehälters ohne zusätzliche aufwendige Verriegelungs- und Andruckmittel ermöglicht. Die Schwenkachse kann hierzu gegebenenfalls geringfügig zu einer gedachten Symmetrieachse des Deckels, welche sich bei geschlossenem Deckel parallel zur Schwenkachse erstreckt, versetzt sein, sodass die Fläche des Deckels, welche in den Behälterinnenraum hinein verschwenkt wird, größer als die Fläche des Deckels ist, welche aus dem Behälterinnenraum beim Öffnen des Deckels heraus bewegt wird.

Anders ausgedrückt zeichnet sich die bevorzugte Anordnung dadurch aus, dass am Pressbehälter ein Deckel zum Verschließen der Befüll- und Entleeröffnung um eine sich parallel zur Fläche des Deckels erstreckende Schwenkachse verschwenkbar aufgenommen ist, und dass das dem Saftablauf gegenüberliegende Ende des Drainageelements drehbeweglich an der Achse befestigt ist, derart, dass das an der Achse befestigte Ende des Drainageelements beim Verschwenken des Deckels um die Schwenkachse im Wesentlichen in seiner räumlichen Position im Innenraum des Pressbehälters verbleibt.

Ferner kann es nach einer weiteren Ausführungsform der erfindungsgemäßen Anordnung ein unterdruckloser Saftsammelbehälter zum Einsatz gelangen. Hierzu ist der rotierbare mobile Pressbehälter nach dem Einsetzen in die Wendeeinrichtung nach dem Ankuppeln des zentralen Kupplungselements an den flexiblen Schlauch mit einem oberhalb des mobilen Pressbehälters angeordneten Saftsammelbehälter verbunden, in den der aus dem Saftablauf austretendes Saft mit Hilfe einer Pumpe, vorzugsweise einer Schlauchpumpe oder Peristaltik-Pumpe gepumpt wird. Der Einsatz einer solchen Schlauchpumpe hat den Vorteil, dass diese selbst nicht durch den zuckerhaltigen Saft verschmutzt, und der Schlauchabschnitt, auf welchen die an sich bekannte Pumpe mechanisch wirkt, leicht gereinigt werden kann. Zudem sind derartige Schlauchpumpen in vorteilhafter Weise selbstansaugend, besitzen eine ausreichende Ansaughöhe von bis zu 9,5 m und können gegenüber der Atmosphäre einen Unterdruck von -950 mbar aufbauen.

Bei dieser zuletzt beschriebenen Ausführungsform wird der Druckmittelraum mit einem Überdruck von max. 500 mbar beaufschlagt, durch welchen das Pressgut an die Drainage-Elemente gedrückt wird. Der flüssige Saft wird durch den von der Pumpe erzeugten Unterdruck zusätzlich aus dem Innenraum des Drainageelements abgesaugt und durch die entsprechend gesteuerte Pumpe in den unterdrucklosen Saftsammelbehälter gefördert, aus welchem der Saft dann per Gravitation oder eine weitere Pumpe entnommen werden kann.

Durch ein weiteres Pumpen kann danach weiterhin ein Unterdruck erzeugt werden, um bei einem sich anschließenden Pressvorgang nach einem Auflockern und Umlagern des im Pressmittelraum verbliebenen Restprodukts den darin enthaltenen Saft durch eine Kombination aus von der Pumpe erzeugtem Unterdruck und im Druckmittelraum anliegendem Überdruck von weniger als 0,5 bar weiter auszupressen.

Anders ausgedrückt ist diese Ausführungsform der Anordnung dadurch gekennzeichnet, dass der Produkt-Abtransport aufgrund der permanenten Kopplung zwischen mobilem Pressbehälter und ortsfestem Saftsammelbehälter, wie zuvor beschrieben, mittels einer Pumpe erfolgen kann, welche gleichzeitig den notwendigen Unterdruck zur Erreichung des insgesamt notwendigen Druckgefälles erzeugt, wobei die notwendige Abscheidung von Produkt und Unterdruck-Volumenstrom innerhalb der Pumpe erfolgt. Durch die Verwendung einer Schlauchpumpe ergibt sich der zusätzliche Vorteil, dass aufgrund der bevorzugt eingesetzten kombinierten Pressung mit Unterdruck und Überdruck der notwendige Pumpenvolumenstrom relativ gering ist.

Alternativ zu einer Schlauchpumpe kann eine Doppel-Membranpumpe zum Einsatz gelangen, deren Saugseite an einer oberhalb des Flüssigkeitsspiegels gelegenen Stelle den in diesem Falle unterdruckfesten Saftsammelbehälter mit Unterdruck beaufschlagt, welcher über einen bevorzugt ebenfalls oberhalb des Flüssigkeitsspiegels angeordneten Safteinlass des Saftsammelbehälters und den flexiblen Schlauch sowie bevorzugt ein oder mehrere Absperr- und Abzweigventile dem Saftablauf des Pressbehälters zugeführt wird. In besonders vorteilhafter Weise ist die Druckseite der Doppel-Membranpumpe bei dieser Ausführungsform über entsprechende Ventile und Abzweigleitungen mit dem Druckmittelraum verbunden, sodass die Druckseite der Pumpe dazu eingesetzt werden kann, den Druckmittelraum mit Druckluft zu beaufschlagen, welche ggf. in einem Druckluft-Sammelbehälter zwischengespeichert werden kann, um diese zu einem späteren Zeitpunkt zum Anlegen der Pressmembran zu verwenden.

Insgesamt können die mobilen Pressbehälter sowie die Pumpe nach dem Pressen in vorteilhafter Weise für andere in dem Verarbeitungsbetrieb notwendige Aufgaben verwendet werden.

Wie von der Anmelderin weiterhin erkannt wurde, lassen sich die mobilen Pressbehälter, wenn diese als Metall-Druckbehälter ausgeführt sind, in besonders vorteilhafter Weise als Zwischenspeicher für die während des Pressvorgangs in den Druckmittelraum einzuleitende Druckluft verwenden. Hierzu werden die jeweiligen Druckmittelräume der mobilen Pressbehälter durch einen Druckluftkompressor oder auch ein Gebläse außerhalb der eigentlichen Presszyklen kontinuierlich mit Druckluft beaufschlagt, die im Vergleich zu den bekannten zentralen Druckluftversorgungssystemen eine deutlich verringerte Leistung besitzen, die z.B. lediglich 1/10 der üblichen Antriebsleitung beträgt. Die Befüllung der mobilen Pressbehälter kann z.B. über eine Druckluftleitungsnetz über einen zentralen Kompressor erfolgen, der über entsprechende Schnellkupplungen und elektrisch betätigbare Ventile temporär mit den Behältern verbindbar ist. Durch den Einsatz von Gebläsen oder Kompressoren mit deutlich verringerter Leistung lassen sich nicht nur die Kosten für die Gebläse verringern, sondern die für die Pressvorgänge benötigte Druckluft lässt sich zudem mit einem höheren Wirkungsgrad gewinnen, da die adiabatischen Verluste geringer sind.

Ein weiterer Vorteil der zuletzt beschriebenen Ausführungsform besteht darin, dass die z.B. über Nacht mit Druckluft befüllten mobilen Pressbehälter in den Weinberg transportiert werden können, um dort einen bereits mit Pressgut befüllten Behälter mit Druckluft zu beaufschlagen. Hierdurch wird die Möglichkeit geschaffen, einen Teil des Traubensafts gewünschten Falls bereits vorab vor Ort zu pressen, um die Zeitdauer für den Transport der Trauben einzusparen und die Belastung der Trauben während des Transports zu vermeiden. Dies kann bei sehr hochwertigen Weinen mitunter gewünscht sein, um die Qualität weiter zu steigern.

Die Erfindung wird nachfolgend unter Bezugnahme auf die Figuren 1 bis 9 anhand bevorzugter Ausführungsformen beschrieben. In den Zeichnungen zeigen:
- Fig. 1: eine schematische Darstellung der erfindungsgemäßen Anordnung,
- Fig. 2: eine schematische perspektivische Darstellung einer erfindungsgemäßen Anordnung umfassend vier Pressbehälter,
- Fig. 3: eine perspektivische Darstellung einer bevorzugten Ausführungsform des Pressbehälters,
- Fig. 4a-c: schematische Zeichnungen einer weiteren Ausführungsform des Pressbehälters,
- Fig. 5: eine Schnittdarstellung des Pressbehälters aus Fig. 4,
- Fig. 6a-d: eine schematische Darstellung weiterer möglicher Geometrien des erfindungsgemäßen Pressbehälters
- Fig. 7a,b: perspektivische Darstellung einer weiteren Ausführungsform des erfindungsgemäßen Pressbehälters,
- Fig. 8: eine schematische Darstellung eines mobilen Pressbehälters aus Kunststoff, und
- Fig. 9: ein Ablaufdiagramm des erfindungsgemäßen Verfahrens zum Auspressen von flüssigkeitshaltigem Pressgut unter Verwendung einer erfindungsgemäßen Anordnung.

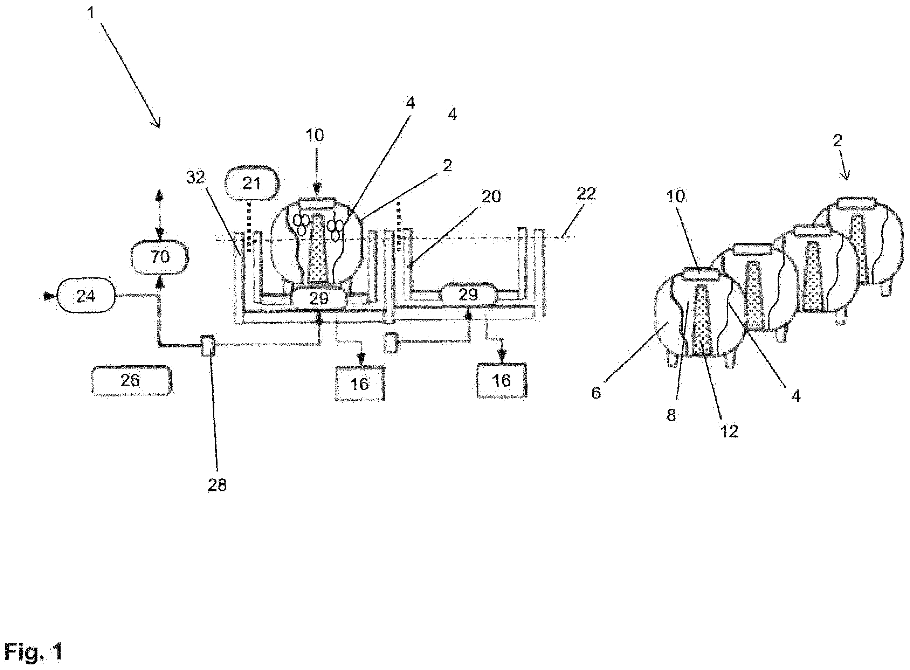

Wie in Figur 1 angedeutet ist, umfasst eine exemplarisch gezeigte erfindungsgemäße Anordnung einen mobilen Pressbehälter 2, dessen Behälterinnenraum durch eine Pressmembran 4 in einen Druckmittelraum 6 und einen Pressmittelraum 8 unterteilt ist. Der Pressbehälter 2 wird durch eine druckdicht verschließbare Befüll- und Entleeröffnung 10 verschlossen, über welche flüssigkeitshaltiges Pressgut in den Pressmittelraum 8 einfüllbar ist. Im Pressmittelraum 8 ist wenigstens ein Drainageelement 12 angeordnet, dessen Innenraum mit einem Saftablauf 14 des Pressbehälters 2 kommuniziert, über welchen flüssiger Saft während eines Pressvorgangs einem Saftsammelbehälter 16 zuführbar ist. Für die für einen Pressvorgang erforderliche Rotation ist der Pressbehälter 2 in einer Wendeeinrichtung 20 aufgenommen. Durch die Wendeeinrichtung 20 ist der Pressbehälter 2 während eines Pressvorgangs aus einer Befüllposition heraus, um einen Winkel von jeweils weniger als 360°, insbesondere um weniger als 270° in zueinander entgegengesetzten Drehrichtungen um eine Drehachse 22 rotierbar.

Die Wendeeinrichtung 20 umfasst, wie in Figur 1 ebenfalls dargestellt ist, einen Antrieb 21 zum Rotieren des mobilen Pressbehälters 2. Dieser kann als Elektromotor oder als ein Druckluftzylinder oder Wasserzylinder ausgeführt sein. Darüber hinaus umfasst die Wendeeinrichtung 20 eine Druckgasquelle 24, insbesondere als Druckluftquelle sowie eine Steuerungseinrichtung 26 zur Steuerung des Antriebs 21 und/oder der Druckgasquelle 24 oder ein mit der Druckgasquelle verbundenes Ventil 28, durch welches die Zufuhr von Druckgas in den Druckmittelraum 6 veränderbar ist. Der Druckmittelraum 6 ist bevorzugt dazu eingerichtet, zum Auspressen des Pressguts mit einem Überdruck von weniger als 0,5 bar beaufschlagt zu werden. Somit entfällt eine kostenaufwendige Überprüfung des Pressbehälters, da Druckbehälter für Überdrücke größer als 0,5 bar gemäß der Druckgeräterichtlinie einer regelmäßigen Prüfung unterzogen weden müssen. Weiterhin ist es in diesem Fall vorgesehen, dass die Anordnung 1 eine Unterdruckquelle 70 umfasst, mit der der Innenraum des Drainageelements 12 zum Auspressen des Pressguts mit einem Unterdruck zwischen 0 bar und -950 mbar beaufschlagbar ist.

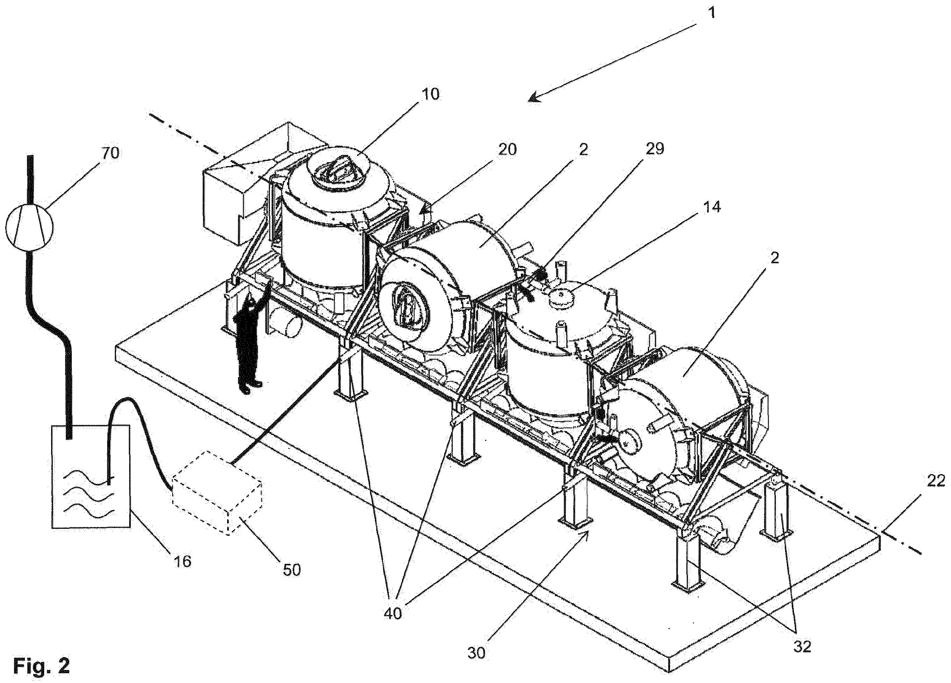

In einer bevorzugten Ausführungsform weist die Wendeeinrichtung 20 zwei oder mehr Aufnahmeplätze 30 zur gleichzeitigen temporären Aufnahme von wenigstens zwei mobilen Pressbehältern 2 auf, wobei jeder Aufnahmeplatz 30 dazu eingerichtet ist, einen an diesem temporär aufgenommenen mobilen Pressbehälter 2 in jede der beiden Drehrichtungen zu rotieren. Figur 2 zeigt eine schematische Darstellung einer erfindungsgemäßen Anordnung 1 mit vier Aufnahmeplätzen 30 für die mobilen Pressbehälter 2. Hierbei sind die mobilen Pressbehälter 2 jeweils in unterschiedlichen Orientierungen dargestellt, in welche diese während eines Pressvorgangs durch die Wendeeinrichtungen 20 gebracht werden. Der Behälter 2 auf der linken Seite der Darstellung befindet sich dabei in der Befüllstellung, in welcher das Pressgut über die Befüll- und Entleeröffnung 10 in den Pressbehälter 2 eingefüllt wird. Der zweite Pressbehälter 2 von links ist horizontal ausgerichtet und zeigt mit der Befüll- und Entleeröffnung 10 zur Seite. In diese Stellung wird der Pressbehälter 2 während des Pressvorgangs gebracht, um das Pressgut im Inneren aufzulockern und zu durchmischen und damit die Saftausbeute nach erneutem Pressen zu erhöhen.

Der dritte Pressbehälter 2 von links befindet sich in der Entleerposition, in welcher das vollständig ausgepresste Pressgut über die Befüll- und Entleeröffnung 10 aus dem Pressbehälter 2 entleert wird. In dieser Position ist ebenfalls der Saftablauf 14 auf der Unterseite des Pressbehälters 2 zu erkennen, durch welchen der Saft während des Pressvorgangs abläuft und in einem Saftsammelbehälter 16 gesammelt wird. Dazu umfasst die Anordnung gemäß einer bevorzugten Ausführungsform einen flexiblen Schlauch 40, über den der jeweilige Saftablauf 14 während des Verschwenkens des Pressbehälters 2 in der Wendeeinrichtung 20 durchgehend bevorzugt über den gesamten Pressvorgang hinweg, strömungsmäßig mit dem Saftsammelbehälter 16 verbunden ist. Der Saftsammelbehälter 16 ist bevorzugt oberhalb des Saftablaufs 14, insbesondere am Grundgestell 32 der Wendeeinrichtung 20, angeordnet. Weiterhin umfasst die Anordnung 1 eine Saftpumpe 50, um den flüssigen Saft und im Pressmittelraum 8 befindliche Luft während eines Pressvorgangs vom Saftablauf 14 in den Saftsammelbehälter 16 zu fördern. In einer bevorzugten Ausführungsform ist die Saftpumpe 50 eine Membranpumpe oder eine Schlauchpumpe, die bevorzugt mechanisch auf die Außenseite des flexiblen Schlauchs 40 oder eines mit diesem verbundenen weiteren flexiblen Schlauchs 41 wirkt, welcher den flexiblen Schlauch 40 mit dem Saftsammelbehälter 16 verbindet.

Der vierte Pressbehälter 2 von links in der Darstellung von Figur 2 befindet sich schließlich exemplarisch in einer Reinigungsposition, in welcher der Innenraum des Pressbehälters 2 nach beziehungsweise vor einem Pressvorgang gereinigt werden kann.

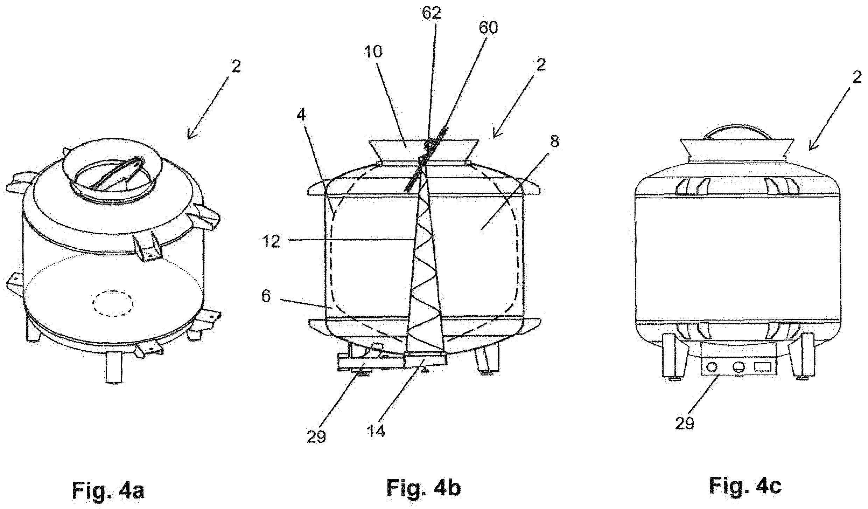

Weiterhin kann es vorgesehen sein, dass der flexible Schlauch 40 und ein mit der Druckgasquelle 24 verbundener Druckmittelschlauch sowie bevorzugt eine mit der Steuerungseinrichtung 26 verbundene elektrische Strom- und Datenleitung über ein in Figur 4b und 4c angedeutetes zentrales Kupplungselement 29 mit dem mobilen Pressbehälter 2 kuppelbar ist. Auf diese Weise wird der mobile Pressbehälter 2 nach dem Einsetzen in die Wendeeinrichtung 20 als Einheit strömungsmäßig mit dem Saftsammelbehälter 16 und der Druckgasquelle 24 gekoppelt sowie bevorzugt im Pressbehälter 2 vorgesehene Sensoren und/oder elektrische Stellmotore elektrisch mit der Steuerungseinrichtung 26 verbunden.

In einer weiteren Ausführungsform der erfindungsgemäßen Anordnung ist es vorgesehen, dass die Druckmittelräume 6 des ersten und zweiten mobilen, in der Wendeeinrichtung 20 aufgenommenen Pressbehälters 2 über eine Druckleitung und Ventile strömungsmäßig miteinander verbindbar sind. Diese Verbindung hat den Vorteil, dass unter Überdruck stehendes Druckgas nach einem Pressvorgang aus dem Druckmittelraum 6 des ersten mobilen Pressbehälters zur Erzeugung eines Vordrucks in den Druckmittelraum 6 des zweiten mobilen Pressbehälters 2 eingeleitet werden kann.

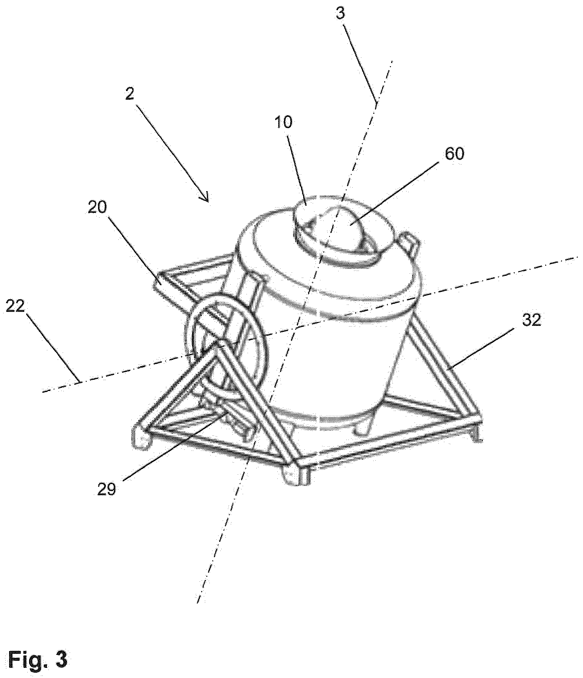

Figur 3 zeigt eine bevorzugte Ausführungsform eines mobilen Pressbehälters 2. Der Behälter ist mittels der Wendeeinrichtung 20 um die Drehachse 22 rotierbar in einem Grundgestell 32 aufgenommen. Die Figuren 4a und 4b zeigen weitere Darstellungen des mobilen Pressbehälters 2 aus Figur 3. Dieser ist bevorzugt als Druckbehälter aus Metall ausgeführt, der eine im Wesentlichen kugelartige oder kurzzylindrische oder kubische Form aufweist. Dabei sind die Befüll- und Entleeröffnung 10 und der Saftablauf 14 auf einander gegenüberliegenden Seiten des Behälters 2 angeordnet. Das Drainageelement 12 erstreckt sich vom Saftablauf 14 entlang einer Behälterhochachse 3 zur Befüll- und Entleeröffnung 10 hin, und die Drehachse 22, um welche der mobile Pressbehälter 2 nach dem Einsetzen in die Wendeeinrichtung 20 rotierbar ist, verläuft im Wesentlichen orthogonal zur Behälterhochachse 3.

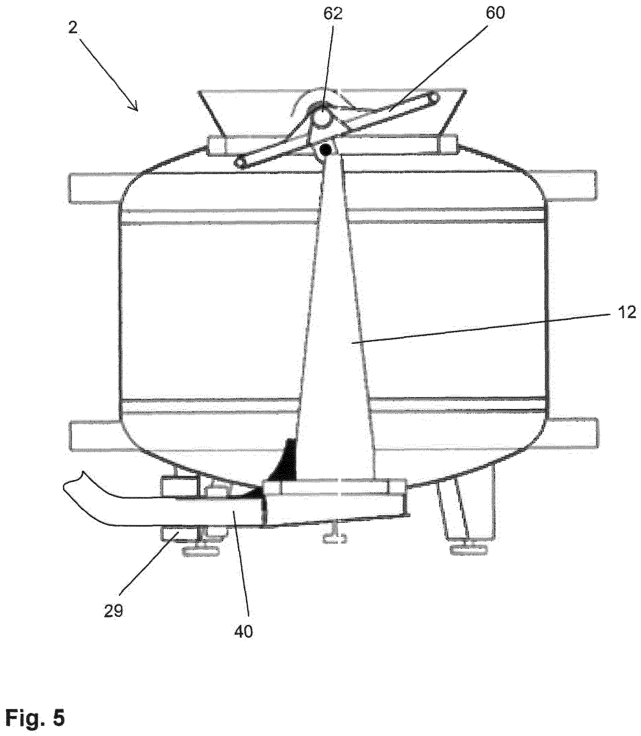

In Figur 5 ist eine Schnittdarstellung einer weiteren bevorzugten Ausführungsform eines mobilen Pressbehälters 2 mit einem verschwenkbaren Deckel 60 und einem an dessen Schwenkachse 62 drehbar fixierten Drainageelement 12 gezeigt. Der auch in den vorherigen Abbildungen gezeigte Deckel 60 zum Verschließen der Befüll- und Entleeröffnung 10 ist um eine sich parallel zur Fläche des Deckels 60 erstreckende Schwenkachse 62 verschwenkbar aufgenommen. Darüber hinaus ist das dem Saftablauf 14 gegenüberliegende Ende des Drainageelements 12 drehbeweglich an der Schwenkachse 62 derart befestigt, dass das an der Schwenkachse 62 befestigte Ende des Drainageelements 12 beim Verschwenken des Deckels 60 um die Schwenkachse im Wesentlichen in seiner räumlichen Position im Innenraum des Pressbehälters 2 verbleibt.

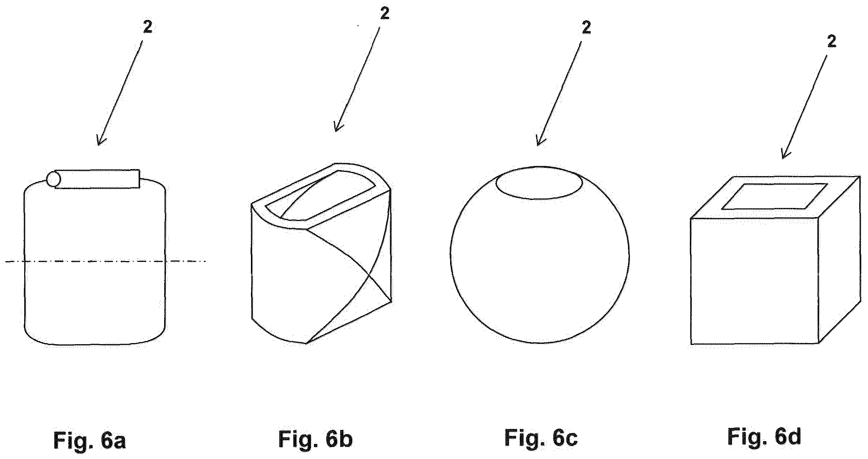

In den Figuren 6a bis 6d sind verschiedene bevorzugte Geometrien mobiler Pressbehälter 2 dargestellt. Der Pressbehälter 2 kann beispielsweise eine zylindrische Form aufweisen, oder kugel- oder quaderförmig sein. Außerdem ist eine Form des Pressbehälters 2, die einen in der Aufsicht ovalen Querschnitt mit konvex ausgestellten Seitenwänden aufweist, wie in Figur 6b dargestellt möglich. Dieser Pressbehälter 2 lässt sich aus vier einzelnen in Form gebogenen Wandbauteilen zusammen setzten, deren Seitenränder zu den Zentren der konvex ausgestellten Seitenwände hin nach Art von konvexen Rhomben zusammenlaufen und zur Erzeugung der gewölbten rhombenartigen Struktur entlang der aneinandergrenzenden Seitenränder verschweißt sind.

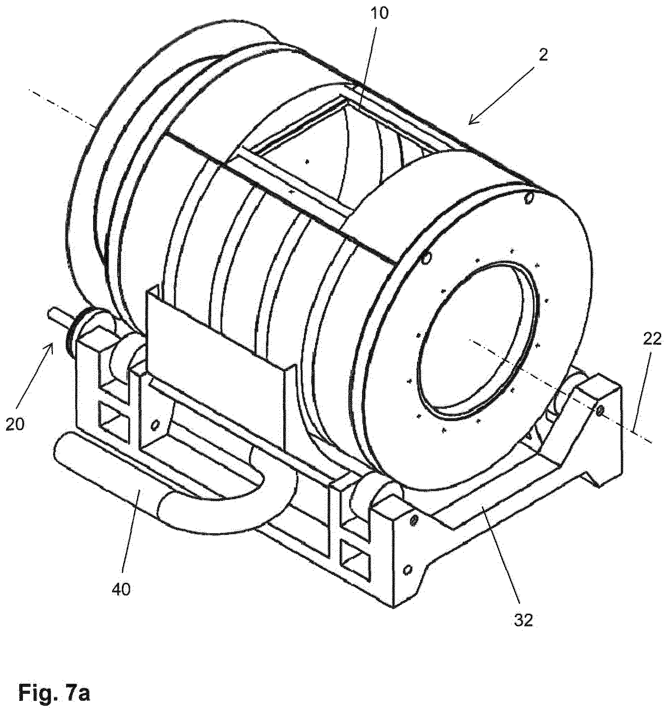

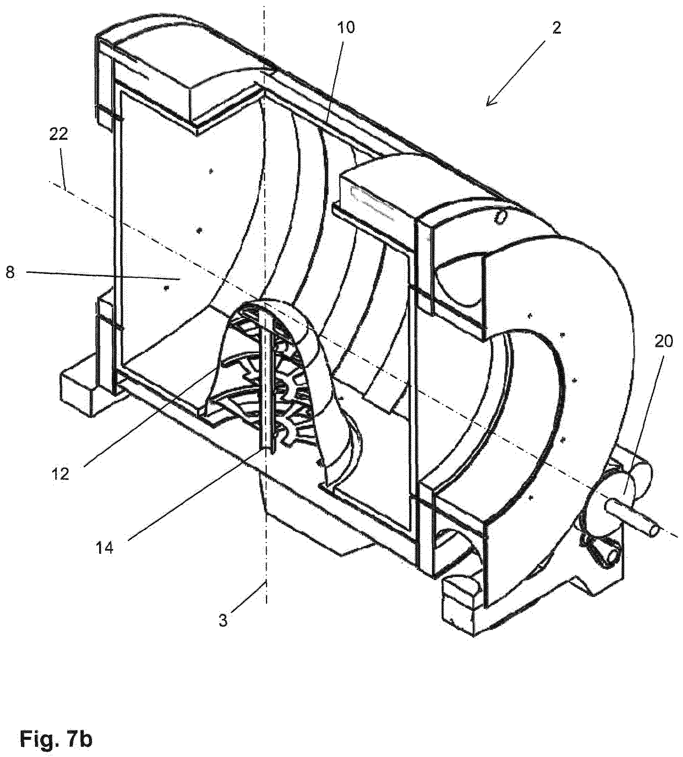

Die Figuren 7a und 7b zeigen eine perspektivische Darstellung eines erfindungsgemäßen Pressbehälters 2. Der zylinderförmige Pressbehälter 2 ist mittels der Wendeeinrichtung 20 um die Drehachse 22 rotierbar auf dem Grundgestell 32 angeordnet. In der Schnittdarstellung von Figur 7b ist das Drainageelement 12, welches sich entlang der Behälterhochachse 3 und in Richtung der Befüll- und Entleeröffnung erstreckt, dargestellt. Durch das Drainageelement 12, welches bevorzugt aus einem flexiblem Siebgewebe mit einer darin angeordneten Spirale besteht, dringt der Saft aus dem Pressgut im Pressmittelraum 8 während des Pressvorgangs hindurch und gelangt schließlich zum Saftablauf 14, wo er über den flexiblen Schlauch 40 zum Saftsammelbehälter 16 geleitet wird.

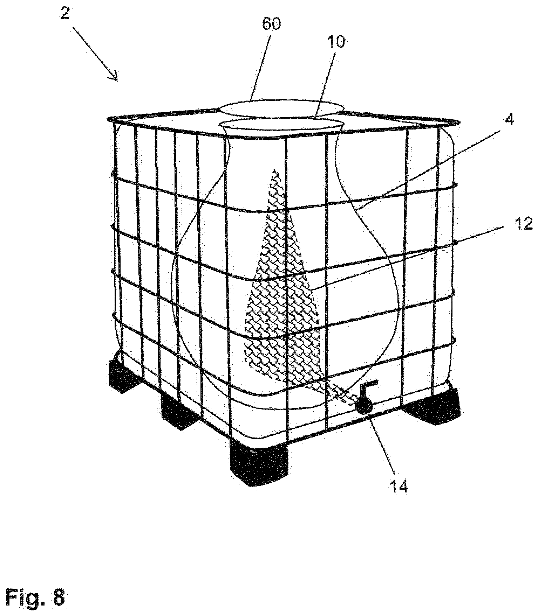

Figur 8 zeigt eine weitere Ausführungsform eines mobilen Pressbehälters 2. Dieser besteht aus einem Material mit verminderter Druckfestigkeit, insbesondere aus Kunststoff oder dünnwandigem Metallblech. Der Pressbehälter 2 weist eine solche Wandstärke auf, dass dieser mit einem Innendruck von maximal 0,5 bar beaufschlagbar ist. IBCs ("intermediate bulk container") eignen sich in vorteilhafter Weise als mobile Pressbehälter, da diese günstig in der Anschaffung und aufgrund der Bauform einfach, beispielsweise mit einem Gabelstapler, zu transportieren sind. Somit können die mobilen Pressbehälter 2 bereits an dem Ernteort mit dem Pressgut befüllt werden, wodurch ein Umfüllen des Pressguts und damit ein zusätzlicher Produktionsschritt entfällt.

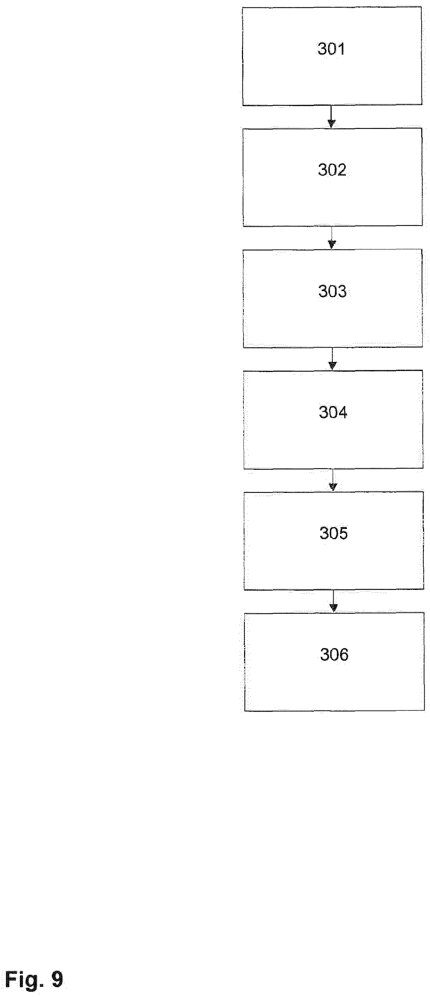

Figur 9 zeigt ein Ablaufdiagramm des erfindungsgemäßen Verfahrens zum Auspressen von flüssigkeitshaltigem Pressgut unter Verwendung einer zuvor beschriebenen Anordnung. Die Verfahrensschritte sind hierbei:
301 Sammeln des Pressguts im mobilen Pressbehälter 2 lokal am Ort der Lese des Pressguts, und/oder
302 Transportieren des Pressguts im mobilen Pressbehälter 2 vom Ort der Lese des Pressguts zu einem Pressgut-Verarbeitungsbetrieb, und/oder
303 Sammeln oder Wiegen des Pressguts im Pressgut-Verarbeitungsbetrieb im mobilen Pressbehälter 2 und/oder Durchführen einer Qualitätsbestimmung, bevorzugt
304 Lagern des Pressguts im mobilen Pressbehälter 2 zur Mazeration und/oder Kühlen des Pressguts zur Verringerung der Temperatur im Pressbehälter,
305 Transportieren des Pressguts im mobilen Pressbehälter 2 zur Wendeeinrichtung 20 der Anordnung 1 und Pressen desselben unter Rotation des Pressbehälters 3 in diesem, und/oder optional
306 Transportieren der im mobilen Pressbehälter 2 nach dem Pressvorgang enthaltenen Tresters im mobilen Pressbehälter 2 zu einer Trester-Kompostierungsanlage oder Trester-Weiterverarbeitungsanlage, sowie optional Sammeln des aus dem Pressgut während eines Pressvorgangs gewonnenen Safts und Lagern in einem weiteren mobilen Pressbehälter 2 und/oder Transportieren des mobilen Pressbehälters mit dem darin enthaltenen Saft zu einer Saft-Weiterverarbeitungsanlage.

### Liste der Bezugszeichen

- 1: Anordnung
- 2: mobiler Pressbehälter
- 3: Behälterhochachse
- 4: Pressmembran
- 6: Druckmittelraum
- 8: Pressmittelraum
- 10: Befüll- und Entleeröffnung
- 12: Drainageelement
- 14: Saftablauf
- 16: Saftsammelbehälter
- 20: Wendeeinrichtung
- 21: Antrieb der Wendeeinrichtung zum Rotieren des Behälters
- 22: Drehachse
- 24: Druckgasquelle
- 26: Steuerungseinrichtung
- 28: Ventil
- 29: Kupplungselement
- 30: Aufnahmeplatz
- 32: Grundgestell der Wendeeinrichtung
- 40: flexibler Schlauch
- 50: Saftpumpe
- 60: Deckel
- 62: Schwenkachse des Deckels
- 70: Unterdruckquelle

## Patentansprüche

1. Anordnung (1) zum Auspressen von flüssigkeitshaltigem Pressgut, umfassend eine Vielzahl von mobil transportierbaren Pressbehältern (2), deren Behälterinnenraum durch eine Pressmembran (4) in einen Druckmittelraum (6) und einen Pressmittelraum (8) unterteilt ist, wobei im jeweiligen Pressbehälter (2) eine druckdicht verschließbare Befüll- und Entleeröffnung (10) angeordnet ist, über welche flüssigkeitshaltiges Pressgut in den Pressmittelraum (8) einfüllbar ist, wobei im Pressmittelraum (8) wenigstens ein Drainageelement (12) angeordnet ist, dessen Innenraum mit einem Saftablauf (14) des Pressbehälters (2) kommuniziert, über welchen flüssiger Saft während eines Pressvorgangs einem Saftsammelbehälter (16) zuführbar ist, und
wobei
die Anordnung (1) eine Wendeeinrichtung (20) umfasst, in die ein jeweiliger mobil transportierbarer Pressbehälter (2) temporär einsetzbar und aufnehmbar und während eines Pressvorgangs aus einer Befüllposition heraus, um einen Winkel von jeweils weniger als 360°, insbesondere um weniger als 270° in zueinander entgegengesetzten Drehrichtungen um eine Drehachse (22) rotierbar ist.

2. Anordnung nach Anspruch 1,
**dadurch gekennzeichnet, dass**
die Anordnung einen flexiblen Schlauch (40) umfasst, über den der Saftablauf (14) während des Verschwenkens des jeweiligen Pressbehälters (2) in der Wendeeinrichtung (20) strömungsmäßig mit dem Saftsammelbehälter (16) verbindbar ist.

3. Anordnung nach Anspruch 1 oder 2,
**dadurch gekennzeichnet, dass**
die Wendeeinrichtung (20) einen Antrieb (21), insbesondere einen Druckluftzylinder oder Wasserzylinder zum Rotieren des mobilen Pressbehälters (2) und/oder eine Druckgasquelle (24), insbesondere Druckluftquelle sowie eine Steuerungseinrichtung (26) zur Steuerung des Antriebs (21) und/oder der Druckgasquelle (24) oder eines mit der Druckgasquelle verbundenen Ventils (28) umfasst, durch welches die Zufuhr von Druckgas in den Druckmittelraum (6) veränderbar ist.

4. Anordnung nach einem der Ansprüche 2 und 3,
**dadurch gekennzeichnet, dass**
der flexible Schlauch (40) und ein mit der Druckgasquelle (24) verbundener Druckmittelschlauch sowie bevorzugt eine mit der Steuerungseinrichtung (26) verbundene elektrische Strom- und Datenleitung über ein zentrales Kupplungselement (29) mit dem jeweiligen mobilen transportierbaren Pressbehälter (2) kuppelbar ist, um diesen nach dem Einsetzen in die Wendeeinrichtung (20) als Einheit strömungsmäßig mit dem Saftsammelbehälter (16) und der Druckgasquelle (24) zu koppeln sowie bevorzugt im Pressbehälter (2) vorgesehene Sensoren und/oder elektrische Stellmotore elektrisch mit der Steuerungseinrichtung (26) zu verbinden.

5. Anordnung nach einem der vorhergehenden Ansprüche,
**dadurch gekennzeichnet, dass**
die Wendeeinrichtung (20) zwei oder mehr Aufnahmeplätze (30) zur gleichzeitigen temporären Aufnahme von wenigstens zwei mobil transportierbaren Pressbehältern (2) aufweist, wobei jeder Aufnahmeplatz (30) dazu eingerichtet ist, einen an diesem temporär aufgenommenen mobil transportierbaren Pressbehälter (2) in jede der beiden Drehrichtungen zu rotieren.

6. Anordnung nach einem Anspruch 5,
**dadurch gekennzeichnet, dass**
die Druckmittelräume (6) des ersten und zweiten mobil transportierbaren, in der Wendeeinrichtung (20) aufgenommenen Pressbehälters (2) über eine Druckleitung und Ventile strömungsmäßig miteinander verbindbar sind, um unter Überdruck stehendes Druckgas nach einem Pressvorgang aus dem Druckmittelraum (6) des ersten mobil transportierbaren Pressbehälters (2) zur Erzeugung eines Vordrucks in den Druckmittelraum (6) des zweiten mobil transportierbaren Pressbehälters (2) einzuleiten.

7. Anordnung nach einem der vorhergehenden Ansprüche,
**dadurch gekennzeichnet, dass**
der jeweilige mobil transportierbare Pressbehälter (2) ein Druckbehälter ist, der eine im Wesentlichen kugelartige oder kurzzylindrische oder kubische Form aufweist, wobei die Befüll- und Entleeröffnung (10) und der Saftablauf (14) auf einander gegenüberliegenden Seiten des Behälters (2) angeordnet sind, und das Drainageelement (12) sich vom Saftablauf (14) entlang einer Behälterhochachse (3) zur Befüll- und Entleeröffnung (10) hin erstreckt, und wobei die Drehachse (22), um welche der jeweilige mobil transportierbare Pressbehälter (2) nach dem Einsetzen in die Wendeeinrichtung (20) rotierbar ist, im Wesentlichen orthogonal zur Behälterhochachse (3) verläuft.

8. Anordnung nach einem der vorhergehenden Ansprüche,
**dadurch gekennzeichnet, dass**
der Saftsammelbehälter (16) oberhalb des Saftablaufs (14), insbesondere am Grundgestell (32) der Wendeeinrichtung (20), angeordnet ist, und dass die Anordnung (1) weiterhin eine Saftpumpe (50) umfasst, um den flüssigen Saft und im Pressmittelraum (8) befindliche Luft während eines Pressvorgangs vom Saftablauf (14) in den Saftsammelbehälter (16) zu fördern.

9. Anordnung nach 8,
**dadurch gekennzeichnet, dass**
die Saftpumpe (50) eine Membranpumpe oder eine Schlauchpumpe ist, die bevorzugt mechanisch auf die Außenseite des flexiblen Schlauchs (40) oder eines mit diesem verbundenen weiteren flexiblen Schlauchs (41) wirkt, welcher den flexiblen Schlauch (40) mit dem Saftsammelbehälter (16) verbindet.

10. Anordnung nach einem der vorhergehenden Ansprüche oder insbesondere danach,
**dadurch gekennzeichnet, dass**
am jeweiligen mobil transportierbaren Pressbehälter (2) ein Deckel (60) zum Verschließen der Befüll- und Entleeröffnung (10) um eine sich parallel zur Fläche des Deckels (60) erstreckende Schwenkachse (62) verschwenkbar aufgenommen ist, und dass das dem Saftablauf (14) gegenüberliegende Ende des Drainageelements (12) drehbeweglich an der Schwenkachse (62) befestigt ist, derart, dass das an der Schwenkachse (62) befestigte Ende des Drainageelements (12) beim Verschwenken des Deckels (60) um die Schwenkachse (62) im Wesentlichen in seiner räumlichen Position im Innenraum des jeweiligen Pressbehälters (2) verbleibt.

11. Anordnung nach einem der vorhergehenden Ansprüche oder insbesondere danach,
**dadurch gekennzeichnet, dass**
der Druckmittelraum (6) dazu eingerichtet ist, zum Auspressen des Pressguts mit einem Überdruck von weniger als 0,5 bar beaufschlagt zu werden, und dass die Anordnung (1) eine Unterdruckquelle (70) umfasst, mit der der Innenraum des Drainageelements (12) zum Auspressen des Pressguts mit einem Unterdruck zwischen 0 bar und - 950 mbar beaufschlagbar ist.

12. Anordnung nach Anspruch 11,
**dadurch gekennzeichnet, dass**
die mobil transportierbaren Pressbehälter (2) aus einem Material mit verminderter Druckfestigkeit, insbesondere aus Kunststoff oder dünnwandigem Metallblech besteht, und der Behälter (2) eine solche Wandstärke aufweist, dass dieser mit einem Innendruck von maximal 0,5 bar beaufschlagbar ist.

13. Verfahren zum Auspressen von flüssigkeitshaltigem Pressgut unter Verwendung einer Anordnung (1) nach einem der vorhergehenden Ansprüche
**dadurch gekennzeichnet, dass**
- das Pressgut im jeweiligen mobil transportierbaren Pressbehälter (2) lokal am Ort der Lese des Pressguts gesammelt, und/oder
- das Pressgut im jeweiligen mobil transportierbaren Pressbehälter (2) vom Ort der Lese des Pressguts zu einem Pressgut-Verarbeitungsbetrieb transportiert wird, und/oder
- dass das Pressgut im Pressgut-Verarbeitungsbetrieb im jeweiligen mobil transportierbaren Pressbehälter (2) gesammelt und/oder gewogen und/oder einer Qualitätsbestimmung unterzogen wird, und/oder
- dass das Pressgut im jeweiligen mobil transportierbaren Pressbehälter (2) zur Mazeration gelagert und/oder zur Verringerung der Temperatur im Pressbehälter gekühlt wird, und/oder
- dass das Pressgut im mobil transportierbaren Pressbehälter (2) zur Wendeeinrichtung (20) der Anordnung (1) transportiert und unter Rotation des Pressbehälters (2) in diesem gepresst wird, und/oder
- dass der im jeweiligen mobil transportierbaren Pressbehälter (2) nach dem Pressvorgang enthaltene Trester im jeweils mobil transportierbaren Pressbehälter (2) zu einer Trester-Kompostierungsanlage oder Trester-Weiterverarbeitungsanlage transportiert wird, und/oder
- dass der aus dem Pressgut während eines Pressvorgangs gewonnene Saft in einem weiteren mobil transportierbaren Pressbehälter (2) gesammelt und/oder gelagert und/oder zu einer Saft-Weiterverarbeitungsanlage transportiert wird.

14. Verwendung eines mobil transportierbaren Pressbehälters (2) einer Anordnung (1) nach einem der Ansprüche 1 bis 12 als Druckspeicherbehälter, und/oder als Transportbehälter für Pressgut und/oder als Transportbehälter für aus Pressgut gepresstem Saft.

## Claims

1. An assembly (1) for pressing liquid-containing pressed product, comprising a plurality of mobile transportable press vessels (2), the vessel interior of which is subdivided by a press membrane (4) into a pressurized medium space (6) and a pressing means space (8), wherein a filling and discharging opening (10) which is able to be closed in a pressure-tight manner and by way of which liquid-containing pressed product is able to be filled into the pressing means space (8) is disposed in a respective press vessel (2), wherein at least one drainage element (12) is disposed in the pressing means space (8), the interior of said drainage element (12) communicating with a juice outlet (14) of the transportable press vessel (2) by way of which liquid juice is able to be supplied to a juice collection vessel (16) during a pressing procedure, **wherein** the assembly (1) comprises a turning installation (20) in which the mobile transportable press vessels (2) are temporarily insertable and receivable and, during a pressing procedure, can be rotated about a rotation axis (22) from a filling position by an angle of in each case less than 360°, in particular by less than 270°, in mutually opposite rotation directions.

2. The assembly as claimed in claim 1,
**characterized in that**
the assembly comprises a flexible hose (40) by way of which the juice outlet (14) during the pivoting of the respective mobile transportable vessel (2) in the turning installation (20) is able to be fluidically connected to the juice collection vessel (16).

3. The assembly as claimed in claim 1 or 2,
**characterized in that**
the turning installation (20) comprises a drive (21), in particular a compressed air cylinder or water cylinder, for rotating the respective mobile press vessel (2), and/or a compressed gas source (24), in particular compressed air source, and a control installation (26) for controlling the drive (21) and/or the compressed gas source (24) or a valve (28) which is connected to the compressed gas source and by way of which the supply of compressed gas into the pressurized medium space (6) is variable.

4. The assembly as claimed in either of claims 2 and 3,
**characterized in that**
the flexible hose (40) and a pressurized medium hose connected to the compressed gas source (24), and preferably an electric power and data line connected to the control installation (26), is/are able to be coupled to the respective mobile transportable press vessel (2) by way of a central coupling element (29) so as to fluidically couple the latter, upon insertion into the turning installation (20), as a unit to the juice collection vessel (16) and the compressed gas source (24), and preferably to electrically connect sensors and/or electric actuators provided in the press vessel (2) to the control installation (26).

5. The assembly as claimed in one of the preceding claims,
**characterized in that**
the turning installation (20) has two or more receptacle spaces (30) for temporarily receiving simultaneously at least two mobile transportable press vessels (2), wherein each receptacle space (30) is configured to rotate a mobile transportable press vessel (2) temporarily received thereon in each of the two rotation directions.

6. The assembly as claimed in claim 5,
**characterized in that**
the pressurized medium spaces (6) of the first and second mobile transportable press vessel (2) received in the turning installation (20) are able to be fluidically connected to each other by way of a pressure line and valves, so as to after a pressing procedure introduce compressed gas at a positive pressure from the pressurized medium space (6) of the first mobile transportable press vessel (2) into the pressurized medium space (6) of the second mobile transportable press vessel (2) for generating a primary pressure.

7. The assembly as claimed in one of the preceding claims,
**characterized in that**
the respective mobile transportable press vessel (2) is a pressure vessel which has a substantially spherical or short-cylindrical or cuboid shape, wherein the filling and discharging opening (10) and the juice outlet (14) are disposed on mutually opposite sides of the vessel (2), and the drainage element (12) extends from the juice outlet (14) along a vessel vertical axis (3) to the filling and discharging opening (10), and wherein the rotation axis (22), about which the respective mobile transportable press vessel (2) is rotatable after insertion into the turning installation (20), runs so as to be substantially orthogonal to the vessel vertical axis (3).

8. The assembly as claimed in one of the preceding claims,
**characterized in that**
the juice collection vessel (16) is disposed above the juice outlet (14), in particular on the main frame (32) of the turning installation (20), and **in that** the assembly (1) furthermore comprises a juice pump (50) for conveying the liquid juice and air located in the pressing means space (8) from the juice outlet (14) into the juice collection vessel (16) during a pressing procedure.

9. The assembly as claimed in claim 8,
**characterized in that**
the juice pump (50) is a diaphragm pump or a hose pump which preferably acts mechanically on the external side of the flexible hose (40) or of a further flexible hose (41) which is connected to the latter and connects the flexible hose (40) to the juice collection vessel (16).

10. The assembly as claimed in one of the preceding claims or in particular as claimed therein,
**characterized in that**
a cover (60) for closing the filling and discharging opening (10) is received on the respective mobile transportable press vessel (2) so as to be pivotable about a swivel axle (62) extending parallel to the face of the cover (60), and **in that** the end of the drainage element (12) that lies opposite the juice outlet (14) is rotatably fastened to the swivel axle (62) in such a manner that the end of the drainage element (12) that is fastened to the swivel axle (62), when pivoting the cover (60) about the swivel axle (62), remains substantially in the spatial position thereof in the interior of the respective transportable press vessel (2).

11. The assembly as claimed in one of the preceding claims or in particular as claimed therein,
**characterized in that**
the pressurized medium space (6) for pressing the pressed product is configured to be impinged with a positive pressure of less than 0.5 bar, and **in that** the assembly (1) comprises a vacuum source (70) by way of which the interior of the drainage element (12) for pressing the pressed product is able to be impinged with a negative pressure between 0 bar and -950 mbar.

12. The assembly as claimed in claim 11,
**characterized in that**
the mobile transportable press vessels (2) are composed of a material with reduced pressure resistance, in particular of plastics material or thin sheet metal, and the vessel (2) has such a wall thickness that said vessel (2) is able to be impinged with an internal pressure of at most 0.5 bar.

13. A method for pressing liquid-containing pressed product using an assembly (1) as claimed in one of the preceding claims,
**characterized in that**
- the pressed product in the respective mobile transportable press vessel (2) is collected locally at the site of harvesting of the pressed product, and/or
- the pressed product in the respective mobile transportable press vessel (2) is transported from the site of harvesting of the pressed product to a pressed product processing establishment, and/or
- **in that** the pressed product in the pressed product processing establishment is collected and or weighed and/or subjected to a quality assessment in the respective mobile transportable press vessel (2), and/or
- **in that** the pressed product in the respective mobile transportable press vessel (2) is stored for maceration and/or cooled in order to lower the temperature in the press vessel, and/or
- **in that** the pressed product in the respective mobile transportable press vessel (2) is transported to the turning installation (20) of the assembly (1) and pressed in the respective transportable press vessel (2) while rotating the latter, and/or
- **in that** the pomace contained in the respective mobile transportable press vessel (2) after the pressing procedure is transported in the mobile transportable press vessel (2) to a pomace composting plant or pomace further processing plant, and/or
- **in that** the juice obtained from the pressed product during a pressing procedure is collected and/or stored and/or transported in a further mobile transportable press vessel (2) to a juice further processing plant.

14. The use of a mobile transportable press vessel (2) of an assembly (1) as claimed in one of claims 1 to 12 as a pressurized storage vessel, and/or as a transport vessel for pressed product and/or as a transport vessel for juice pressed from pressed product.

## Revendications

1. Ensemble (1) pour extraire un produit à presser contenant un liquide, comprenant une pluralité de récipients de pressage (2) pouvant être transportés de manière mobile, dont l'intérieur est divisé par une membrane de pressage (4) en une chambre de milieu de pression (6) et une chambre de milieu de pressage (8), un orifice de remplissage et de vidange (10) pouvant être fermé de manière étanche à la pression étant disposé dans le récipient de pressage (2) respectif, par laquelle du produit à presser contenant du liquide peut être introduit dans la chambre de milieu de pressage (8), au moins un élément de drainage (12), dont l'intérieur communique avec une sortie de jus (14) du récipient de pressage (2), par laquelle du jus liquide peut être amené à un récipient collecteur de jus (16) pendant une opération de pressage, étant disposé dans la chambre de milieu de pressage (8),
et
l'ensemble (1) comprenant un dispositif de retournement (20), dans lequel un récipient de pressage (2) respectif pouvant être transporté de manière mobile peut être introduit et reçu temporairement et peut être tourné, pendant une opération de pressage, autour d'un axe de rotation (22) dans des directions de rotation opposées les unes aux autres d'un angle respectivement inférieur à 360°, en particulier inférieur à 270°, hors d'une position de remplissage.

2. Ensemble selon la revendication 1,
**caractérisé en ce que**
l'ensemble comprend un tuyau flexible (40), par lequel la sortie de jus (14) peut être reliée au récipient collecteur de jus (16) en communication fluidique lors du pivotement du récipient de pressage (2) respectif dans le dispositif de retournement (20).

3. Ensemble selon la revendication 1 ou 2,
**caractérisé en ce que**
le dispositif de retournement (20) comprend un entraînement (21), en particulier un cylindre à air comprimé ou un cylindre à eau pour faire tourner le récipient de pressage (2) mobile et/ou une source de gaz comprimé (24), en particulier une source d'air comprimé, ainsi qu'un dispositif de commande (26) pour commander l'entraînement (21) et/ou la source de gaz comprimé (24) ou une soupape (28) reliée à la source de gaz comprimé, par laquelle l'amenée de gaz comprimé dans la chambre de milieu de pression (6) peut être modifiée.

4. Ensemble selon l'une des revendications 2 et 3,
**caractérisé en ce que**
le tuyau flexible (40) et un tuyau de milieu de pression relié à la source de gaz comprimé (24) et, de manière préférée, une ligne électrique de courant et de données reliée au dispositif de commande (26) peuvent être couplés au récipient de pressage (2) transportable mobile respectif par un élément de couplage central (29) pour coupler en communication fluidique ce dernier, après l'insertion dans le dispositif de retournement (20), en tant qu'unité au récipient collecteur de jus(16) et à la source de gaz comprimé (24), et pour relier électriquement des capteurs prévus de manière préférée dans le récipient de pressage (2) et/ou des moteurs électriques de réglage au dispositif de commande (26).

5. Ensemble selon l'une des revendications précédentes,
**caractérisé en ce que**
le dispositif de retournement (20) comporte deux emplacements de réception (30) ou plus destinés à recevoir simultanément temporairement au moins deux récipients de pressage (2) pouvant être transportés de manière mobile, chaque emplacement de réception (30) étant mis au point pour faire tourner un récipient de pressage (2) pouvant être transporté de manière sur celui-ci temporairement dans chacune des deux directions de rotation.

6. Ensemble selon la revendication 5,
**caractérisé en ce que**
les chambres de milieu de pression (6) du premier et du deuxième récipient de pressage (2) pouvant être transporté de manière mobile et reçu dans le dispositif de retournement (20) peuvent être reliées entre elles en communication fluidique par une conduite de pression et de soupapes pour introduire, après une opération de pressage, du gaz comprimé sous surpression provenant de la chambre de milieu de pression (6) du premier récipient de pressage (2) pouvant être transporté de manière mobile pour produire une pression préalable dans la chambre de milieu de pression (6) du deuxième récipient de pressage (2) pouvant être transporté de manière mobile.

7. Ensemble selon l'une des revendications précédentes,
**caractérisé en ce que**
le récipient de pressage (2) pouvant être transporté de manière mobile respectif est un récipient de pression, qui présente une forme sensiblement sphérique ou cylindrique courte ou cubique, l'orifice de remplissage et de vidange (10) et la sortie de jus (14) étant disposés sur des côtés opposés du récipient (2), et l'élément de drainage (12) s'étendant depuis la sortie de jus (14) le long d'un axe vertical (3) de récipient vers l'orifice de remplissage et de vidange (10), et l'axe de rotation (22), autour duquel le récipient de pressage (2) pouvant être transporté de manière mobile respectif peut tourner après l'insertion dans le dispositif de retournement (20), s'étendant sensiblement orthogonalement à l'axe vertical (3) de récipient.

8. Ensemble selon l'une des revendications précédentes,
**caractérisé en ce que**
le récipient collecteur de jus (16) est disposé au-dessus de la sortie de jus (14), en particulier sur le cadre de base (32) du dispositif de retournement (20), et que l'ensemble (1) comprend par ailleurs une pompe à jus (50) pour acheminer le jus liquide et l'air se trouvant dans la chambre de milieu de pressage (8) de la sortie de jus (14) dans le récipient collecteur de jus (16) pendant une opération de pressage.

9. Ensemble selon 8,
**caractérisé en ce que**
la pompe à jus (50) est une pompe à membrane ou une pompe à tuyau souple, qui agit de manière préférée mécaniquement sur le côté extérieur du tuyau flexible (40) ou d'un autre tuyau flexible (41) relié à celui-ci, qui relie le tuyau flexible (40) au récipient collecteur de jus (16).

10. Ensemble selon l'une des revendications précédentes ou en particulier selon celle-ci,
**caractérisé en ce que**
un couvercle (60) pour fermer l'orifice de remplissage et de vidange (10) est reçu sur le récipient de pressage (2) pouvant être transporté de manière mobile respectif de manière à pouvoir pivoter autour d'un axe de pivotement (62) s'étendant parallèlement à la surface du couvercle (60), et que l'extrémité de l'élément de drainage (12) opposée à la sortie de jus (14) est fixée de manière mobile en rotation à l'axe de pivotement (62) de telle manière que l'extrémité de l'élément de drainage (12) fixée sur l'axe de pivotement (62) reste sensiblement dans sa position spatiale à l'intérieur du récipient de pressage (2) respectif lors du pivotement du couvercle (60) autour de l'axe de pivotement (62).

11. Ensemble selon l'une des revendications précédentes ou en particulier selon celle-ci,
**caractérisé en ce que**
la chambre de milieu de pression (6) est mise au point pour être soumise à l'action d'une surpression inférieure à 0,5 bar pour l'extraction du produit à presser, et que l'ensemble (1) comprend une source de dépression (70), avec laquelle l'intérieur de l'élément de drainage (12) peut être soumis à l'action d'une dépression comprise entre 0 bar et 950 mbar pour extraire le produit à presser.

12. Ensemble selon la revendication 11,
**caractérisé en ce que**
le récipient de pressage (2) pouvant être transporté de manière mobile est constitué d'un matériau à résistance à la compression réduite, en particulier de matière plastique ou de tôle métallique à paroi mince, et le récipient (2) présente une épaisseur de paroi telle qu'il peut être soumis à l'action d'une pression interne de 0,5 bar au maximum.

13. Procédé d'extraction d'un produit à presser contenant un liquide en utilisant un ensemble (1) selon l'une des revendications précédentes,
**caractérisé en ce que**
- le produit à presser dans le récipient de pressage (2) pouvant être transporté de manière mobile respectif est collecté localement sur l'emplacement de la lecture du produit à presser, et/ou
- le produit à presser est transporté dans le récipient de pressage (2) pouvant être transporté de manière mobile respectif depuis l'emplacement de la lecture du produit à presser jusqu'à une opération de traitement du produit à presser, et/ou
- que la produit à presser est collecté et/ou pesé et/ou soumis à une détermination de qualité dans le récipient de pressage (2) pouvant être transporté de manière mobile respectif lors de l'opération de traitement du produit à presser, et/ou
- que le produit à presser est stocké dans le récipient de pressage (2) pouvant être transporté de manière mobile respectif pour macération et/ou est refroidi afin de réduire la température dans le récipient de pressage, et/ou
- que le produit à presser est transporté dans le récipient de pressage (2) pouvant être transporté de manière mobile jusqu'au dispositif de retournement (20) de l'ensemble (1) et y est pressé du fait de la rotation du récipient de pressage (2), et/ou
- que le marc contenu après l'opération de pressage dans le récipient de pressage (2) pouvant être transporté de manière mobile respectif est transporté dans le récipient de pressage (2) pouvant être transporté de manière mobile respectif vers une installation de compostage de marc ou une installation de traitement ultérieur de marc, et/ou
- que le jus obtenu à partir du produit à presser pendant l'opération de pressage est collecté et/ou stocké dans un autre récipient de pressage (2) pouvant être transporté de manière mobile et/ou est transporté vers une installation de traitement ultérieur du jus.

14. Utilisation d'un récipient de pressage (2) pouvant être transporté mobile d'un ensemble (1) selon l'une des revendications 1 à 12, comme récipient de stockage sous pression et/ou comme récipient de transport pour un produit à presser et/ou comme récipient de transport pour du jus pressé à partir d'un produit à presser.
